(19) **Europäisches Patentamt**

**European Patent Office**

**Office européen des brevets**

(11) **EP 1 028 309 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.7: **G01D 5/38**

(21) Anmeldenummer: **00100279.9**

(22) Anmeldetag: **19.01.2000**

(54) **Optische Positionsmesseinrichtung**

Optical encoder

Codeur optique

(84) Benannte Vertragsstaaten:
**DE FR GB IT**

(30) Priorität: **04.02.1999 DE 19904470**
**01.12.1999 DE 19957777**

(43) Veröffentlichungstag der Anmeldung:
**16.08.2000 Patentblatt 2000/33**

(73) Patentinhaber: **Dr. Johannes Heidenhain GmbH**
**83292 Traunreut (DE)**

(72) Erfinder:
• **Hermann, Michael**
**83342 Tacherting (DE)**

• **Huber, Walter**
**83278 Traunstein (DE)**
• **Holzapfel, Wolfgang, Dr.**
**83119 Obing (DE)**
• **Höfer, Volker**
**83301 Traunreut (DE)**

(56) Entgegenhaltungen:
EP-A- 0 577 090          DE-B- 2 653 545
US-A- 4 079 252          US-A- 5 332 896
US-A- 5 559 602

**Beschreibung**

Die vorliegende Erfindung betrifft eine optische Positionsmeßeinrichtung, die zur präzisen Bestimmung der Relativposition zweier zueinander beweglicher Objekte geeignet ist.

Es sind inkrementale Positionsmeßeinrichtungen bekannt, bei denen die maßstab- und abtastseitig vorgesehenen Teilungen, d.h. die Meßteilung und ein oder mehrere Abtastteilungen, unterschiedliche Teilungsperioden aufweisen. Werden diese Teilungen von einer Lichtquelle beleuchtet, so resultiert in einer Detektorebene ein periodisches Streifenmuster, das mit Hilfe einer geeigneten Detektoranordnung erfaßt werden kann. Das periodische Streifenmuster resultiert hierbei aus einer Wechselwirkung der von der Lichtquelle emittierten Strahlenbündel mit den verschiedenen Teilungen im Strahlengang. Dieses Streifenmuster sei im folgenden als Vernier-Streifenmuster bezeichnet, wobei die Periodizität dieses Streifenmusters durch die Vernier-Periode definiert sei.

Hierbei kann es sich im Zusammenhang mit der Art und Weise der Erzeugung des Vernier-Streifenmusters zum einen um sog. abbildende Positionsmeßeinrichtungen mit relativ groben Teilungsperioden auf Maßstab- und Abtastseite handeln. Das resultierende Vernier-Streifenmuster wird hierbei im wesentlichen im Schattenwurf erzeugt. Diese Systeme umfassen in der Regel eine Meßteilung sowie eine Abtastteilung; hierzu sei z.B. auf die DE 195 27 287 A1 oder DE 1 798 368 A1 verwiesen. Die Abtastung des resultierenden Streifenmusters mit einer relativ großen Vernier-Periode erfolgt jeweils mit Hilfe geeignet angeordneter Quadrantendetektoren. Desweiteren sei hierzu auf die DE 26 53 545 hingewiesen.

Zum anderen kann das resultierende Vernier-Streifenmuster prinzipiell auch mit einer interferentiellen Positionsmeßeinrichtung erzeugt werden, bei der die verwendeten Teilungsstrukturen auf Maßstab- und Abtastseite sehr kleine Teilungsperioden aufweisen. Das abgetastete Vernier-Streifenmuster in der Detektorebene entsteht bei derartigen Meßeinrichtungen aus Teilstrahlbündeln, die an den verwendeten Teilungen gebeugt werden und zur Interferenz gelangen. In diesem Zusammenhang sei etwa auf die DE 27 14 324 verwiesen.

Es sollen nunmehr sowohl abbildende Positionsmeßeinrichtungen als auch interferentielle Positionsmeßeinrichtungen zur Erzeugung derartiger Vernier-Streifenmuster angegeben werden, die bestimmten Anforderungen genügen.

So soll grundsätzlich gewährleistet sein, daß aus der Abtastung des Vernier-Streifenmusters im Fall der Relativbewegung hinreichend gut modulierte Abtastsignale resultieren. Eventuelle Verschmutzungen auf Seiten der Meßteilung sollen sich hierbei möglichst nicht auf die Abtastsignale auswirken. Desweiteren ist eine gewisse Flexibilität hinsichtlich der Lage der Detektorebene gefordert, da mitunter aufgrund konstruktiver Vorgaben die Detektorebene nicht immer unmittelbar hinter der letzten durchlaufenen Teilung der Positionsmeßeinrichtung angeordnet werden kann. Letzteres ist insbesondere im Hinblick auf kompakt bauende Abtasteinheiten von Bedeutung. Ferner ist aufzuführen, daß bei kleineren Perioden des Vernier-Streifenmusters in abbildenden Systemen der Abstand zwischen der letzten durchlaufenen Teilung und der Detektorebene äußerst klein sein sollte. Grund hierfür sind die höheren Beugungsordnungen, die zu einem Streifenbild mit lediglich geringem Kontrast führen. Ein derartiger geringer Abstand wiederum ist in der Praxis jedoch nur schwer realisierbar; so könnten dabei etwa Bonddrähte der jeweiligen Detektorelemente, die über die Detektorelemente hinausragen, beschädigt werden etc.. Im Fall interferentieller Systeme ist oft eine räumliche Trennung der austretenden Beugungsordnungen durch Linsen erforderlich. Bei derartigen Positionsmeßeinrichtungen treten jedoch auch im Fall unterschiedlicher Teilungsperioden der eingesetzten Teilungen in den Brennebenen der Linsen keine Vernierstreifen auf.

Eine optische Positionsmeßeinrichtung, die diesen Anforderungen genügt ist Gegenstand des Patentanspruches 1.

Vorteilhafte Ausführungsformen der erfindungsgemäßen Positionsmeßeinrichtung ergeben sich aus den Maßnahmen in den abhängigen Patentansprüchen.

Die erfindungsgemäßen Maßnahmen, insbesondere auf Seiten der Detektoranordnung, gewährleisten nunmehr eine hochauflösende, verschmutzungsunempfindliche bzw. störunempfindliche Erzeugung der verschiebungsabhängigen Abtastsignale. Dies ist aufgrund der entsprechend ausgebildeten Detektoranordnung sichergestellt, da sich eventuelle Verschmutzungen auf der Meßteilung auf die verschiedenen, phasenverschobenen Signalanteile weitgehend gleichmäßig auswirken.

Desweiteren resultiert in Kenntnis der optimalen Lage der Detektorebene eine gewisse Flexibilität im Hinblick auf verschiedenste konstruktive Gegebenheiten. So ist es beispielsweise nicht mehr unbedingt erforderlich, die Detektoranordnung unmittelbar nach der letzten jeweils durchlaufenen Teilung anzuordnen; es wurde erfindungsgemäß vielmehr erkannt, daß es weitere Möglichkeiten zur Anordnung der Detektorelemente gibt, die ebenfalls hinreichend gut modulierte Abtastsignale liefern. Dadurch resultiert letztlich die Möglichkeit eine sehr kompakt bauende Abtasteinheit bei gleichzeitig hohem Signalkontrast bzw. Modulationsgrad zu realisieren.

Ebenso kann nunmehr in Kenntnis der optimalen Lage der Detektorebene auch eine interferentielle Positionsmeßeinrichtung angegeben werden, die abtastseitig ein Vernier-Streifenmuster liefert. Als Vorteil der erfindungsgemäßen interferentiellen Positionsmeßeinrichtungen, in denen keine Trennung der verschiedenen Beugungsordnungen erfolgt, ist weiterhin aufzuführen, daß sämtliche Signalanteile gleich beeinflußt werden, wenn sich über die Länge der Meßteilung die Beugungseigenschaften ändern sollten.

Zudem können auf diese Art und Weise in interferentiellen Systemen Signale mit jeweils 90° Phasenversatz erzeugt werden, die in Standard-Auswerteelektroniken weiterverarbeitet werden können. Durch die sehr präzise Erzeugung von Gegentakt-Signalen läßt sich desweiteren auch die zweite Harmonische eliminieren, die ansonsten Fehler bei der nachfolgenden Signalinterpolation bewirkt.

Selbstverständlich lassen sich die erfindungsgemäßen Überlegungen sowohl bei rotatorischen als auch bei linearen Positionsmeßeinrichtungen anwenden. Ebenso ist es möglich Positionsmeßeinrichtungen erfindungsgemäß auszubilden, die im Auflicht oder aber im Durchlicht arbeiten.

Weitere Vorteile sowie Einzelheiten der erfindungsgemäßen optischen Positionsmeßeinrichtung ergeben sich aus der nachfolgenden Beschreibung mehrerer Ausführungsbeispiele anhand der beiliegenden Zeichnungen.

Dabei zeigt

Figur 1    den grundsätzlichen Aufbau eines ersten Ausführungsbeispieles der erfindungsgemäßen Positionsmeßeinrichtung, ausgebildet als abbildende Positionsmeßeinrichtung;

Figur 2    eine Darstellung der Detektorebene des Ausführungsbeispieles der erfindungsgemäßen optischen Positionsmeßeinrichtung aus Figur 1 in Verbindung mit dem abgetasteten Vernier-Streifenmuster;

Figur 3    eine schematische Darstellung zur Erläuterung der Zusammenhänge mit der optimalen Positionierung der Detektorebene bei abbildenden Positionsmeßeinrichtungen;

Figur 4    eine schematische Darstellung eines dritten Ausführungsbeispieles der erfindungsgemäßen Positionsmeßeinrichtung, ausgebildet als interferentielle Positionsmeßeinrichtung;

Figur 5    eine schematische Darstellung eines fünften Ausführungsbeispieles der erfindungsgemäßen Positionsmeßeinrichtung, ausgebildet als interferentielle Positionsmeßeinrichtung;

Figur 6    eine schematische Darstellung zur Erläuterung der Verhältnisse im Fall einer nicht-kollimierten Beleuchtung.

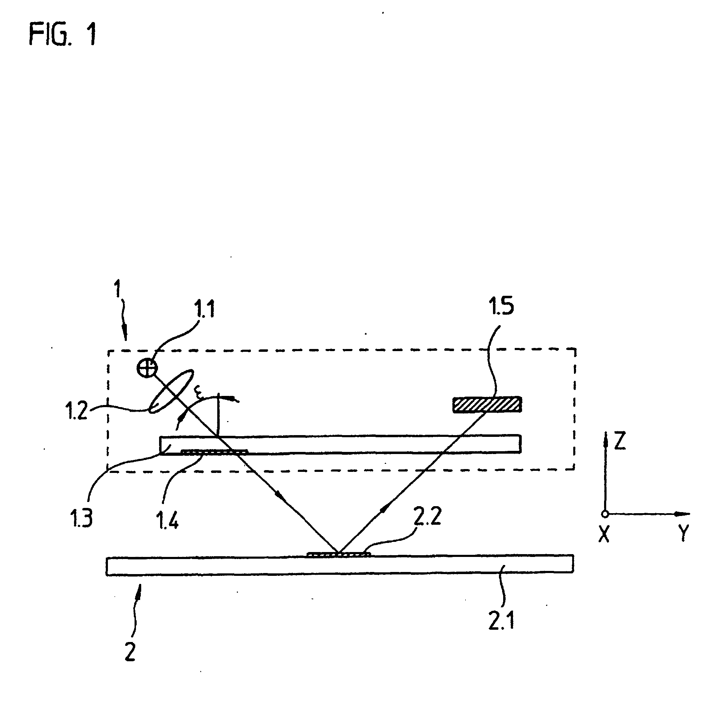

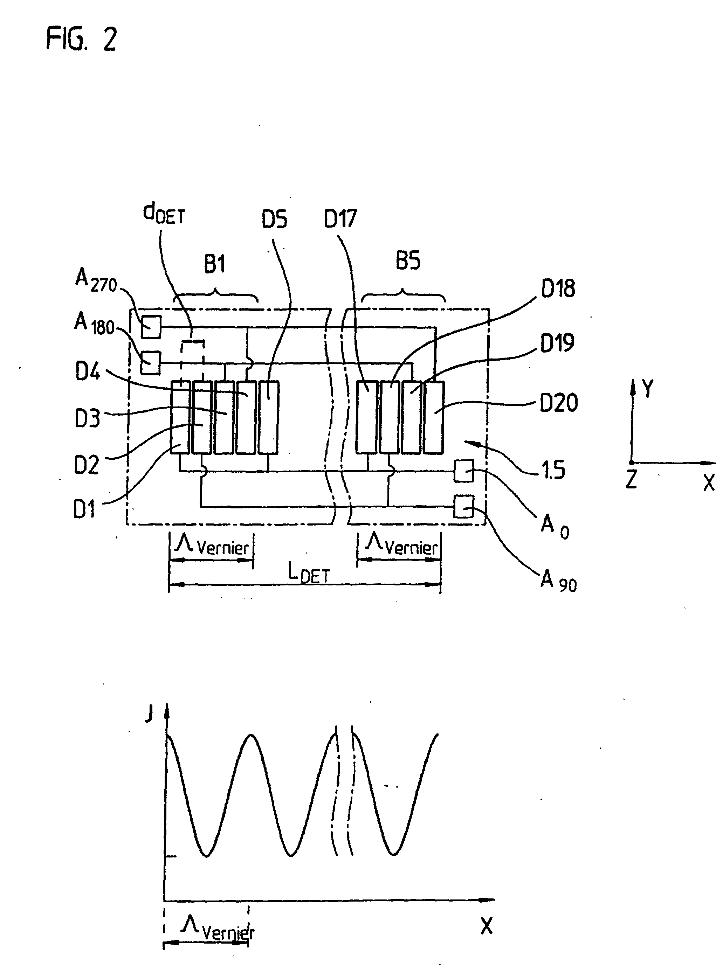

Ein erstes Ausführungsbeispiel der erfindungsgemäßen optischen Positiorismeßeinrichtung sei nachfolgend anhand der Figuren 1 und 2 erläutert. Gezeigt ist hierbei in Figur 1 eine abbildende optische Positionsmeßeinrichtung in einer schematisierten seitlichen Ansicht. Die optische Positionsmeßeinrichtung besteht im wesentlichen aus einer Abtasteinheit 1 und einem Maßstab 2 mit einer Meßteilung 2.2 und einem Meßteilungsträger 2.1. Abtasteinheit 1 und Maßstab 2 sind mit zwei zueinander beweglichen Objekten verbunden, deren Relativposition zueinander bestimmt werden soll. Dabei kann es sich z.B. um Werkzeug und Werkstück in einer numerisch gesteuerten Werkzeugmaschine handeln. Im dargestellten Ausführungsbeispiel sind die Abtasteinheit 1 und der Maßstab 2 in Meßrichtung x zueinander verschiebbar, wobei x senkrecht zur Zeichenebene orientiert ist. Die abgetastete Meßteilung 2.2 besteht aus einer bekannten Auflicht-Inkrementalteilung auf einem Meßteilungträger 2.1 mit alternierend in Meßrichtung x angeordneten, reflektierenden und nicht-reflektierenden Teilbereichen, deren Längsachse in y-Richtung orientiert ist. Als Teilungsperiode $TP_M$ der Meßteilung 2.2 sei die Breite eines reflektierenden Teilbereiches zuzüglich der Breite eines nicht-reflektierenden Teilbereiches in Meßrichtung x verstanden. Die abgetastete Meßteilung 2.2 ist in diesem Ausführungsbeispiel demzufolge als reines Amplitudengitter ausgebildet; die Teilungsperiode $TP_M$ ist als $TP_M = 20.00\mu m$ gewählt, das Teilbereichs-Teilungsperioden-Verhältnis $\tau$, d.h. das Verhältnis aus der Breite eines reflektierenden Teilbereichs zur Teilungsperiode in Meßrichtung x, beträgt $\tau = 0.5$.

Die relativ zur Meßteilung 2.2 verschiebbare Abtasteinheit 1 umfaßt im gezeigten Ausführungsbeispiel eine Lichtquelle 1.1, eine Kollimatoroptik 1.2, eine transparente Abtastplatte 1.3 mit einer Abtastteilung 1.4 mit der Abtast-Teilungsperiode $TP_A$ sowie eine Detektoranordnung 1.5. Die optische Achse der Lichtquelle 1.1 ist gegen die Normale auf die Abtastplatte 1.3 um einen Winkel $\varepsilon = 30°$ in der Zeichenebene verkippt angeordnet. Die Abtastteilung 1.4 dieser Ausführungsform ist als Phasengitter ausgebildet und besitzt eine Teilungsperiode $TP_A = 18.52\mu m$ (somit $TP_M \neq TP_A$), das Verhältnis $\tau$ aus Steg/Teilungsperiode ist als $\tau = 0.5$ gewählt, der Phasenhub $\varphi$ beträgt $\varphi = \pi/2$. Bereits an dieser Stelle werden der Vollständigkeit halber die nachfolgend noch detailliert zu erläuternden Größen $\eta$ und $\beta$ für dieses Ausführungsbeispiel angegeben, die den Fall eines abbildenden Systems bei kollimierter Beleuchtung beschreiben: $\eta = 0$, $\beta = 1$.

Die von der Lichtquelle 1.1 emittierten Strahlenbündel durchtreten nach der Kollimation durch die Kollimatoroptik 1.2 zunächst die transparente Abtastplatte 1.3, durchlaufen die Phasengitter-Abtastteilung 1.4 und treffen dann auf die reflektierend ausgebildete Meßteilung 2.2 auf. Von dort werden die Strahlenbündel in Richtung der Abtastplatte 1.3 zurückreflektiert und durchlaufen die Abtastplatte 1.3 in einem optisch-unwirksamen, transparenten Fenster-Bereich benachbart zur eigentlichen Abtastteilung 1.4, bevor sie auf die Detektoranordnung 1.5 in der Detektorebene gelangen. Dort erfolgt die Erfassung des periodischen Streifenmusters bzw. der verschiebungsabhängig modulierten Abtastsignale und ggf. bereits eine Vorverarbeitung dieser Signale, ehe diese an eine nachgeordnete - nicht dargestellte - Auswerteeinheit übertragen werden.

Wesentliche erfindungsgemäße Maßnahmen seien nunmehr anhand der Darstellung in Figur 2 erläutert. Diese zeigt in schematischer Form einen Teil der Detektoranordnung 1.5 der optischen Positionsmeßeinrichtung in der Detektorebene sowie die Intensitätsverteilung eines damit abgetasteten Vernier-Streifenmusters.

Die Detektoranordnung 1.5 besteht aus mehreren strahlungsempfindlichen Detektorelementen D1 - D20, die in Meßrichtung x benachbart zueinander angeordnet werden. Die einzelnen Detektorelemente D1 - D20 besitzen allesamt die gleiche Geometrie in Form eines schmalen Rechteckes, dessen Längsachse in der Detektorebene in y-Richtung, d.h. senkrecht zur Meßrichtung x orientiert ist. Über die vorgesehene Länge $L_{DET}$ der Detektoranordnung 1.5 sind in Meßrichtung x insgesamt 20 einzelne Detektorelemente D1 - D20 angeordnet, die in in fünf Gruppen blockweise zusammengefaßt sind. Jeder Block B1 - B5 besitzt in der dargestellten Ausführungsform mit kollimierter Beleuchtung hierbei in Meßrichtung x die Länge $\Lambda_{Vernier}$, die der Periode des erzeugten Vernier-Streifenmusters in der Detektorebene entspricht, d.h. $L_{DET} = k * \Lambda_{Vernier}$, wobei im gezeigten Beispiel k = 5 gilt. Die Größe $\Lambda_{Vernier}$ sei deshalb nachfolgend als Vernier-Periode bezeichnet.

Allgemein sind N Detektorelemente jeweils innerhalb des Abstandes $\beta * \Lambda_{Vernier}$ angeordnet, wobei über den später noch näher zu erläuternden Korrekturfaktor $\beta$ eine eventuelle nicht-kollimierte Beleuchtung berücksichtigt werden kann. Im obigen Fall mit kollimierter Beleuchtung gilt demzufolge $\beta = 1$, während der Fall der nicht-kollimierten Beleuchtung durch $\beta \neq 1$ beschrieben wird; die exakte Herleitung des Korrekturfaktors $\beta$ folgt im Verlauf der Beschreibung.

Der Abstand benachbarter Detektorelemente D1 - D20 wird nachfolgend als $d_{DET}$ bezeichnet und beträgt im allgemeinen Fall $d_{DET} = (n + \Delta\varphi/360°) * \Lambda_{Vernier}$. Hierbei ist n = 0, 1, 2, 3..., während $\Delta\varphi$ die Phasenverschiebung der erfaßten Signale benachbarter Detektorelemente angibt. Im dargestellten Ausführungsbeispiel ist $d_{DET} = \frac{1}{4} * \Lambda_{Vernier}$, d.h. n = 0 und $\Delta\varphi = 90°$.

Die erwähnte Vernier-Periode $\Lambda_{Vernier}$ ergibt sich dabei im Fall einer kollimierten Beleuchtung einer optischen Positionsmeßeinrichtung mit mehreren Meß- und/oder Abtast-Teilungen - nachfolgend lediglich Teilungen genannt - und entsprechend vorgegebenen Teilungsperioden $TP_i$ der verschiedenen Teilungen in allgemeiner Form gemäß folgender Gleichung (1):

$$\Lambda_{Vernier} = 1/\left( \sum_{i=1}^{M} ((n_i - n_i')/TP_i ) \right) \qquad \text{Gl. (1),}$$

mit

$n_i$ :     auftretende Beugungsordnungen eines ersten Teilstrahlenbündels an einer Teilung,

$n_i'$:     auftretende Beugungsordnungen eines zweiten Teilstrahlenbündels an einer Teilung,

$TP_i$:     Teilungsperiode der jeweiligen Teilung,

M:     Zahl der durchlaufenen Teilungen.

Hierbei wird vorausgesetzt, daß abgesehen von der auch in Figur 1 dargestellten Kollimatoroptik 1.2 keine weiteren optischen Elemente im Strahlengang angeordnet sind, die ggf. die Kollimation der Strahlenbündel beeinflußen könnten.

Im Beispiel der Figur 1 mit den Meß- und Abtastteilungen 2.2, 1.4 ergibt sich die Vernier-Periode $\Lambda_{Vernier}$ aus den vorgegebenen Teilungsperioden $TP_M$ und $TP_A$ der Abtast- und Meßteilungen und M = 2 gemäß Gleichung (1) zu :

$$\Lambda_{Vernier} = 1/((1/TP_A)-(1/TP_M))$$

Aus dieser Beziehung geht hervor, daß die Vernier-Periode $\Lambda_{Vernier}$ des resultierenden Vernier-Streifenmusters umso kleiner ist, je stärker sich die Teilungsperioden $TP_A$ und $TP_M$ der Abtast- und Meßteilung unterscheiden.

Anschaulich läßt sich die oben analytisch für den Fall der kollimierten Beleuchtung angegebene Vernier-Periode $\Lambda_{Vernier}$ so definieren, daß darunter grundsätzlich die Periode des resultierenden (Teil-) Streifenmusters in der Ebene der letzten durchlaufenen Teilung verstanden sei.

Pro Block B1 - B5 sind innerhalb der Detektoranordnung 1.5 im gezeigten Ausführungsbeispiel jeweils vier einzelne Detektorelemente im oben erwähnten Abstand $d_{DET}$ vorgesehen. Benachbarte Detektorelemente liefern bei der Abtastung des Vernier-Streifenmusters jeweils um 90° phasenversetzte Teil-Abtastsignale.

Im allgemeinen Fall von k Detektorelementen pro Block B1 - B5 resultieren demzufolge aus benachbarten Detektorelementen um 360°/k phasenversetzte Teil-Abtastsignale.

Wie ebenfalls aus der Darstellung in Figur 2 erkennbar ist, sind diejenigen Detektorelemente D1 - D20 der verschiedenen Blöcke B1 - B5 miteinander verschaltet bzw. ausgangsseitig leitend verbunden, die phasengleiche Ausgangssignale bzw. Teil-Abtastsignale liefern. Die letztlich derart resultierenden Abtastsignale $A_0$, $A_{90}$, $A_{180}$ und $A_{270}$ werden auswerteseitig in bekannter Art und Weise weiterverarbeitet. An den beiden Längsseiten der Detektoranordnung 1.5 sind hierzu Kontaktierungsbereiche vorgesehen, über die die erzeugten Abtastsignale $A_0$, $A_{90}$, $A_{180}$ und $A_{270}$ abgegriffen werden können.

In einem typischen Ausführungsbeispiel einer derartigen Detektoranordnung ist eine Vernierperiode von 250 µm vorgegeben, die abgetastet werden soll. Hierzu werden insgesamt zehn Blöcke mit jeweils vier Detektorelementen eingesetzt, d.h. die Länge $L_{DET}$ innerhalb der Detektoranordnung in Meßrichtung x beträgt $L_{DET}$ = 10 * 250µm = 2.5mm. Die Breite eines Detektorelementes in x-Richtung wird mit 47.5 µm, die Länge in y-Richtung mit 1.8mm gewählt. Der Abstand $d_{DET}$ zwischen den Mitten benachbarter Detektorelemente in x-Richtung beträgt 62.5 µm.

Der Phasenabstand $\Delta\phi$ zwischen den Ausgangssignalen benachbarter Detektorelemente beträgt allgemein

$$\Delta\phi = (m_1 + m_2/k) * 360 \, [°].$$

Für die verschiedenen Größen gilt dabei

$m_1$ = 0, 1, 2, 3, ....

$m_2$ = 1, 2, 3, .... (k - 1).

Während im gezeigten Ausführungsbeispiel insgesamt vier phasenverschobene Abtastsignale $A_0$ - $A_{270}$ detektiert und weiterverarbeitet werden, ist es im Rahmen der vorliegenden Erfindung selbstverständlich möglich, die Anzahl und/oder die Breite der Detektorelemente bzw. deren Abstände zueinander pro Block zu variieren, so daß dann beispielsweise drei um 120° phasenverschobene Abtastsignale resultieren, die weiterverarbeitet werden können usw.. Ebenso bestehen selbstverständlich Variationsmöglichkeiten im Hinblick auf die Anzahl der Blöcke mit Detektorelementen, die in der Detektoranordnung eingesetzt werden. Auf diese Art und Weise läßt sich demzufolge sowohl einstellen, wieviele phasenverschobene Abtastsignale erzeugt werden als auch die entsprechenden Phasenbeziehungen zwischen den Abtastsignalen.

Durch die Vielzahl verbundener Detektorelemente einer Phasenlage, die wiederum verschachtelt mit den Detektorelementen der anderen Phasenlagen angeordnet sind, läßt sich eine sog. "Einfeldabtastung" auch bei der Abtastung von Vernier-Streifenmustern realisieren. Bei derartigen "Einfeldabtastungen" werden alle phasenverschobenen Siganalanteile der Abtastsignale aus dem selben abgetasteten Bereich der Meßteilung gewonnen. Eine lokale Verschmutzung der Meßteilung wirkt sich damit auf alle Signalanteile im wesentlichen gleich aus; es ergeben sich deshalb keine Interpolationsfehler an der verschmutzten Stelle, d.h. es resultiert ein wesentlich genaueres Meßsystem. Ein ähnlicher Vorteil ist auch hinsichtlich eventueller Teilungsfehler aufzuführen.

Die Qualität der jeweiligen "Einfeldabtastung" hängt von der erzeugten Vernierperiode ab. Je kleiner die Vernier-Periode ist, desto gleichmäßiger verteilen sich die erwähnten Fehler aufgrund von Teilungsungenauigkeiten bzw. Verschmutzungen auf alle phasenverschobenen Signalanteile. Bei der Dimensionierung einer derartigen Positonsmeßeinrichtung wird deshalb vorzugsweise angestrebt, möglichst kleine Vernier-Perioden mittels entsprechender Detektoranordnungen abzutasten.

Wie bereits oben angedeutet ist neben der konkreten Ausgestaltung der Detektoranordnung desweiteren von Bedeutung, daß die Detektoranordnung, wie sie etwa in Figur 2 gezeigt ist, räumlich in Bezug auf die anderen Komponenten der erfindungsgemäßen Positionsmeßeinrichtung derart angeordnet wird, daß ein hinreichender Modulationsgrad der detektierten Abtastsignale bzw. ein hinreichender Kontrast des Vernier-Streifenmusters resultiert. Insbesondere relevant ist hierbei die Entfernung Z der Detektorebene von der jeweils zuletzt durchlaufenen bzw. zuletzt wirksamen Teilung der Positionsmeßeinrichtung. Je nach Ausbildung der erfindungsgemäßen optischen Positionsmeßeinrichtung kann es sich bei der letzten durchlaufenen bzw. zuletzt wirksamen Teilung um eine Abtastteilung oder aber um die Meßteilung handeln. Der Abstand Z von dieser letzten durchlaufenen Teilung sei nachfolgend als Normalen-Abstand zwischen der Ebene mit der letzten durchlaufenen bzw. zuletzt wirksamen Teilung und der Detektorebene verstanden.

Im Rahmen der vorliegenden Erfindung wurde nunmehr erkannt, daß grundsätzlich eine Abnahme des Kontrastes des erzeugten Vernier-Streifenmusters mit zunehmender Entfernung Z von der letzten durchlaufenen Teilung vorliegt. Die Kontrastabnahme ist hierbei umso ausgeprägter, je kleiner die Teilungsperioden der verwendeten Abtast- und Meßteilungen und je kleiner die Vernier-Perioden des Vernier-Streifenmusters sind. Insbesondere bei hochauflösenden derartigen Positionsmeßeinrichtungen mit kleinen Vernier-Perioden ergibt sich somit das Problem der geeigneten Anordnung der Detektorebene, um einen hinreichenden Kontrast des Vernier-Streifenmusters und damit eine gute Modulation der Abtastsignale zu gewährleisten.

Erfindungsgemäß wurde jedoch darüberhinaus erkannt, daß der Kontrast in definierten Abständen $Z_n$ von der letzten durchlaufenen Teilung aus wieder ansteigt, d.h. es liegen auch mit zunehmender Entfernung Z Detektorebenen vor, in denen ein relativ großer Kontrast des erzeugten Vernier-Streifenmusters resultiert. Diese Detektorebenen seien in Anlehnung an den bekannten Talbot-Effekt nachfolgend als Vernier-Talbot-Ebenen bezeichnet. Die Vernier-Talbot-Ebenen befinden sich im allgemeinen Fall mit kollimierter Beleuchtung in den Abständen $Z_n$ von der letzten durchlaufenen Teilung aus, wobei für $Z_n$ gilt:

$$Z_n = n * d_{VT} \qquad \text{(Gl. 2)}$$

Für n gilt hierbei n = 1, 2, 3...

Die Größe $d_{VT}$ sei nachfolgend als Vernier-Talbot-Abstand bezeichnet und ergibt sich gemäß folgender Gleichung (3):

$$d_{VT} = (\Lambda_{Vernier} * TP_{eff})/\lambda \qquad \text{(Gl. 3)}$$

Hierbei ist

$d_{VT}$: Abstand benachbarter Vernier-Talbot-Ebenen mit hinreichendem Kontrast des Vernierstreifenmusters,

$\Lambda_{Vernier}$: Vernier-Periode des abgetasteten Vernier-Streifenmusters gemäß Gl. (1); allgemein die Periode des Streifenmusters am Ort der letzten durchlaufenen Teilung

$TP_{eff}$: effektive Teilungsperiode der Abbtastanordnung, die die Richtungen der an der letzten durchlaufenen Teilung austretenden Beugungsordnungen, die eine hinreichende Intensität aufweisen, richtig beschreibt; bei abbildenden Systemen entspricht $TP_{eff}$ in der Regel der Teilungsperiode der letzten Teilung, in interferentiellen Dreigitter-Systemen mitunter der Hälfte oder einem Drittel der letzten Teilungsperiode der letzten Teilung

$\lambda$: Wellenlänge der verwendeten Lichtquelle,

Im Ausführungsbeispiel der Figur 1 ist $TP_{eff} = TP_M$, d.h. der Vernier-Talbot-Ebenen-Abstand $d_{VT}$ ergibt sich mit Gl. (3) als $d_{VT} = (\Lambda_{Vernier} * TP_M)/\lambda$.

Der ausgeschlossene Fall n = 0 in Gl. (2) würde demzufolge bedeuten, daß unmittelbar hinter der letzten durchlaufenen Teilung eine derartige, geeignete Detektorebene liegt, in der dann eine Detektoranordnung gemäß Figur 2 positioniert werden könnte. Ist dies aus bestimmten konstruktiven Gründen nicht möglich, so wird die Detektoranordnung in dieser Ausführungsform erfindungsgemäß im Abstand $Z_1 = 1 * (TP_M * \Lambda_{Vernier})/\lambda$ hinter der letzten Teilung angeordnet, also n = 1 gewählt etc..

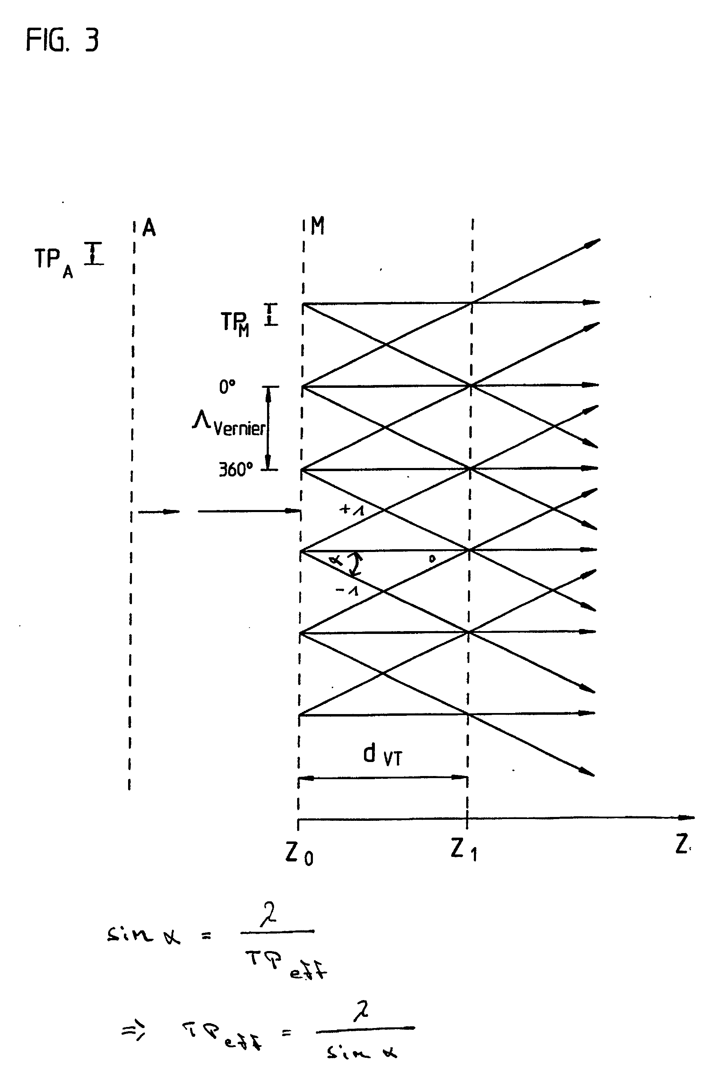

Eine schematische, nicht-maßstabsgerechte Darstellung dieser Zusammenhänge ist in Figur 3 gezeigt, die neben der Meßteilung M und der Abtastteilung A desweiteren die verschiedenen geometrischen Größen $TP_M$, $TP_A$, $\Lambda_{Vernier}$, $Z_n$ und $d_{VT}$ zeigt, wie sie in den Gleichungen (2) und (3) verwendet werden. Desweiteren ist in der Darstellung der Figur 3 angedeutet, weshalb sich in periodischen Abständen $d_{VT}$ geeignete Detektorebenen mit hinreichendem Kontrast ergeben. So treten aufgrund des Vernier-Effektes unmittelbar nach der letzten durchlaufenen Teilung Vernier-Streifen auf. Die sich ausbreitenden Lichtbündel besitzen jedoch keine einheitliche Ausbreitungsrichtung. Es existieren vielmehr verschiedene Beugungsordnungen, je nach den gewählten Teilungsparametern. So treten an der letzten durchlaufenen Teilung vor der Detektoranordnung - in diesem Fall der Meßteilung M - nicht nur Strahlenbündel in 0. Beugungsordnung aus, sondern es resultieren auch +/-1. und höhere Beugungsordnungen, die sich in Richtung der nachgeordneten Detektoranordnung ausbreiten. Die Feinaufspaltung der einzelnen Beugungsordnungen aufgrund des Vernier-Effektes, durch deren Interferenz die einzelnen Teil-Vernierstreifen überhaupt erst entstehen, wird hier vernachlässigt.

Betrachtet man nun eine solche Beugungsordnung isoliert, so tritt das selbe Vernier-Streifenmuster auf wie bei der Betrachtung des gesamten Lichtbündels mit allen überlagerten Beugungsordnungen. Jede Beugungsordnung weist also ein Teil-Vernierstreifenmuster in Teilungsrichtung x auf. Während in der Ebene der letzten durchlaufenen Teilung M noch eine phasenrichtige Überlagerung der verschiedenen Teil-Vernierstreifenmuster vorliegt, so ändern sich die Phasenbeziehungen aufgrund der unterschiedlichen Ausbreitungsrichtungen anschließend. In den erwähnten Abständen $Z_n$ von der letzten Teilung A aus liegen jedoch wieder kontrastreiche Vernier-Streifenmuster vor, da sich die Teil-Vernierstreifenmuster unterschiedlicher Beugungsordnungen wieder phasenrichtig überlagern.

Insbesondere wichtig sind in der Praxis hierbei die Detektorebenen mit den Abständen $Z_1$ und $Z_2$ von der letzten Teilung M aus, da bei noch größeren Werten für n sich ggf. die nicht optimal kollimierte Beleuchtung zusätzlich negativ bemerkbar macht, d.h. den Kontrast verringert.

Der beschriebene Effekt ähnelt somit sehr der bekannten Selbstabbildung von Gittern, die als Talbot-Effekt bekannt ist. Die oben beschriebene Selbstabbildung von Vernierstreifen-Systemen wird deshalb als Vernier-Talbot-Effekt bezeichnet; die Größe $d_{VT}$ als Vernier-Talbot-Abstand.

Nachfolgend seien konkrete Zahlenangaben für die Parameter eines weiteren, zweiten Ausführungsbeispieles der erfindungsgemäßen optischen Positionsmeßeinrichtung aufgeführt, welches ebenfalls wiederum als abbildendes System ausgelegt ist und einen grundsätzlichen Aufbau analog zum Beispiel in Figur 1 aufweist. Ein abbildendes System sei hierbei derart definiert, daß dabei ohne Vernier-Effekt keine Trennung der austretenden Beugungsordnungen erforderlich ist, da alle nennenswerten Intensitätsmodulationen der einzelnen Beugungsordnungen etwa gleichphasig sind und sich damit nicht gegenseitig auslöschen. In der Regel sind die letzten durchlaufenen Teilungen derartiger abbildender Systeme als Amplitudengitter ausgebildet.

In dieser weiteren, zweiten Ausführungsvariante der erfindungsgemäßen Positionsmeßeinrichtung wird eine LED oder ein Halbleiterlaser als Lichtquelle eingesetzt, welche eine Wellenlänge $\lambda$ = 860nm liefert. Die optische Achse der Lichtquelle ist um den Winkel $\varepsilon$ = 30° in Richtung der Teilungsbereich-Längsachse gegen die Normale auf die Abtastplatte verkippt angeordnet. Die von der Lichtquelle emittierten Strahlenbündel gelangen zunächst auf eine Abtastteilung auf der transparenten Abtastplatte, die als Phasengitter ausgebildet ist und alternierend angeordnete Teilungsbereiche in Form von Stegen und Lücken aufweist. Das Phasengitter der Abtastteilung hat eine Abtast-Teilungsperiode $TP_A$ = 37.04 µm, einen Phasenhub $\varphi$ = $\pi$ sowie ein Steg-Teilungsperioden-Verhältnis $\tau$ = 0.5, d.h. ein Steg weist in Meßrichtung x die Breite einer Lücke auf. Nach der Aufspaltung der auf das Phasengitter auftreffenden Strahlenbündel in die verschiedenen Beugungsordnungen gelangen die gebeugten Strahlenbündel auf die Reflexions-Meßteilung. Diese ist als Amplitudengitter mit alternierend angeordneten, reflektierenden Strichen und nicht-reflektierenden Lücken ausgebildet und besitzt eine Teilungsperiode $TP_M$ = 20 µm $\neq TP_A/2$ sowie ein Strich-Teilungsperioden-Verhältnis $\tau$ = 0.5. Von dort wiederum werden die Strahlenbündel in Richtung der Abtastplatte zurückreflektiert, wo sie durch ein transparentes Fenster derselben treten und dann schließlich auf die Detektoranordnung auftreffen. Dort wird letztlich das resultierende Vernier-Streifenmuster detektiert, das bei der angegebenen Variante gemäß Gl. (1) eine Vernier-Periode $\Lambda_{Vernier}$ = $1/((2/TP_A) - (1/TP_M))$ aufweist. Die Detektoranordnung ist hierbei im Abstand $Z_1$ = $(\Lambda_{Vernier} * TP_M)/\lambda$ von der letzten durchlaufenen Teilung aus angeordnet und kann analog zum Beispiel in Figur 2 ausgebildet werden, so daß die letztlich gewünschte Anzahl phasenverschobener Abtastsignale ausgangsseitig resultiert. In der Regel wird die Detektoranordnung hierbei so dimensioniert, daß entweder drei um 120° phasenverschobene Abtastsignale oder aber vier um 90° phasenverschobene Abtastsignale resultieren. Die Signalperiode der detektierten Abtastsignale entspricht in diesem Ausführungsbeispiel im übrigen der Meßteilungsperiode $TP_M$. Wie im ersten Ausführungsbeispiel werden der Vollständigkeit halber bereits an dieser Stelle die nachfolgend noch zu erläuternden beiden Größen $\eta$ und $\beta$ angegeben: $\eta$ = 0, $\beta$ = 1.

Während bislang die Zusammenhänge für abbildende Positionsmeßeinrichtungen erläutert wurden, soll durch die nachfolgende Beschreibung weiterer Ausführungsbeispiele in Form interferentieller Positionsmeßeinrichtungen deutlich gemacht werden, daß sich die erfindungsgemäßen Überlegungen auch bei derartigen Systemen anwenden lassen.

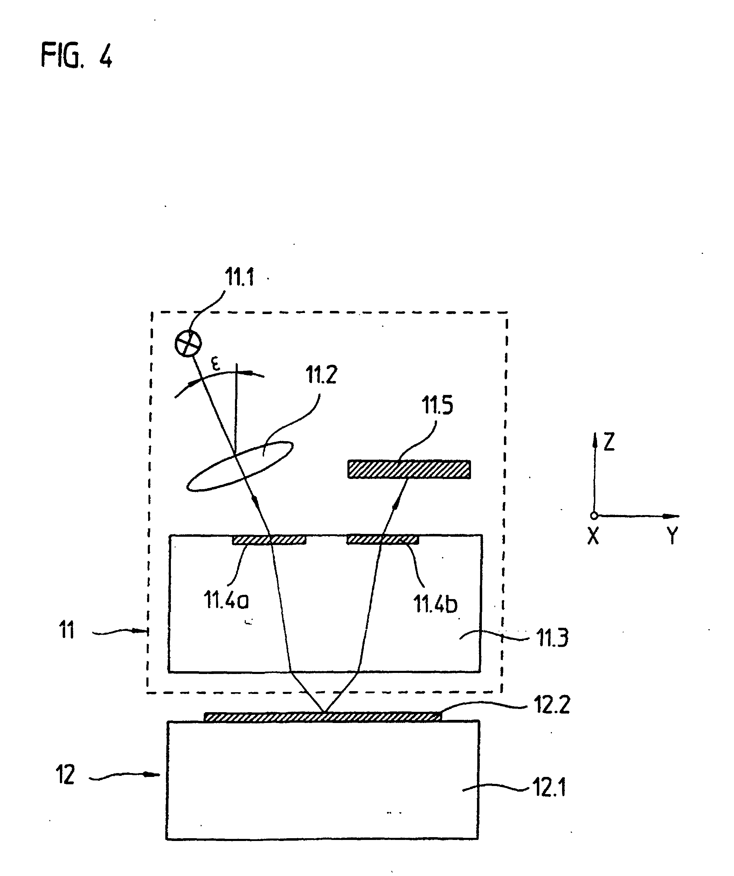

Figur 4 zeigt hierbei in einer schematisierten Seitenansicht ein drittes Ausführungsbeispiel der erfindungsgemäßen optischen Positionsmeßeinrichtung, nunmehr ausgebildet als interferentielle Positionsmeßeinrichtung. Die Positionsmeßeinrichtung umfaßt wiederum eine Abtasteinheit 11, die in Meßrichtung x gegenüber einem Maßstab 12 verschiebbar angeordnet ist, wobei letzterer aus einem Meßteilungsträger 12.1 sowie einer darauf angeordneten Meßteilung 12.2 besteht. Die Meßrichtung x sei in dieser Darstellung senkrecht zur Zeichenebene orientiert. Zur Abtasteinheit 11 gehört eine Lichtquelle 11.1, ausgebildet als LED oder als geeigneter Halbleiterlaser, deren optische Achse in Strichrichtung um einen Winkel $\varepsilon$ gegenüber der Normalen auf die Oberseite der transparenten Abtastplatte 11.3 verkippt angeordnet ist. Der Lichtquelle 11.1 ist eine Kollimatoroptik 11.2 nachgeordnet, die die von der Lichtquelle 11.1 emittierten Strahlenbündel durchlaufen, bevor diese auf einen ersten Teilbereich der Abtastteilung 11.4a treffen, die in diesem Beispiel auf der Oberseite der Abtastplatte 11.3 angeordnet ist. Die Abtastteilung 11.4a ist wie in den vorhergehenden Ausführungsbeispielen als Phasengitter ausgebildet und weist eine Abtast-Teilungsperiode $TP_A$ =15.75µm, einen Phasenhub $\varphi$ = $\pi$ sowie ein Steg-Teilungsperioden-Verhältnis $\tau$ = 0.5 auf. In Bezug auf die Definition der verschiedenen Gitterparameter sei auf die obigen Ausführungsbeispiele verwiesen. An der Abtastteilung 11.4a erfolgt hierbei die Aufspaltung der auftreffenden Strahlenbündel in verschiedene Beugungsordnungen, anschließend treffen die gebeugten Strahlenbündel auf die Reflexions-Meßteilung 12.2 auf. Diese ist nunmehr ebenfalls als Phasengitter ausgebildet mit der Teilungsperiode $TP_M = 8\mu m \neq 0.5 * TP_A$, dem Phasenhub $\varphi = \pi$ und dem Steg-Teilungsperioden-Verhältnis $\tau = 0.5$. Nach erfolgter Reflexion in Richtung der wiederum gebeugten Strahlenbündel in Richtung der Abtastplatte 11.3, treffen diese auf einen zweiten Teilbereich der Abtastteilung 11.4b, nach dem eine Vereinigung der verschiedenen aufgespaltenen Strahlenbündel erfolgt. Nach dem Durchtreten der Abtastteilung 11.4b, die in diesem Fall die letzte durchlaufene Teilung darstellt, resultiert wiederum ein Vernier-Streifenmuster, das eine Vernier-Periode $\Lambda_{Vernier} = 1/((4/TP_A) - (2/TP_M))$aufweist. Die Vernier-Periode $\Lambda_{Vernier}$ ergibt sich wiederum aus der oben bereits erwähnten Gleichung (1). Wie in den vorhergehenden beiden Ausführungsbeispielen werden bereits an dieser Stellte die nachfolgend noch zu erläuternden beiden Größen $\eta$ und $\beta$ angegeben: $\eta = 0.5$, $\beta =1$.

Erneut kommt es auch in diesem Beispiel nur in bestimmten Entfernungen $Z_n$ von der letzten Teilung aus zur phasenrichtigen Überlagerung der verschiedenen, sich in verschiedene Beugungsrichtungen ausbreitenden Teil-Vernierstreifenmuster. Nur in diesen Entfernungen liegt ein resultierendes Vernier-Streifenmuster mit hinreichendem Kontrast vor und kann mit Hilfe der Detektoranordnung 11.5 erfaßt werden. Die Detektoranordnung 11.5 weist wie angedeutet einen grundsätzlichen Aufbau auf, der dem Aufbau im Beispiel der Figur 2 entspricht. Für die Entfernungen bzw. Abstände $Z_n$ optimaler Detektorebenen von der letzten durchlaufenen Teilung muß berücksichtigt werden, daß die Teil-Vernierstreifen bereits in der Ebene der letzten durchlaufenen Teilung zueinander phasenverschoben sind. Diese Phasenverschiebung muß durch entsprechend geänderte Abstände $Z_n$ kompensiert werden. Es gilt nunmehr die folgende Gleichung (4):

$$Z_n = (n + \eta) * d_{VT} \qquad\qquad Gl.\ (4)$$

Hierbei ist

$n = 0, 1, 2, 3.....,$

$d_{VT}$:  Abstand benachbarter Detektorebenen bzw. Vernier-Talbot-Ebenen mit hinreichendem Kontrast des Vernierstreifenmusters; bestimmt sich gemäß Gl. (3),

$\eta$:  Phasenverschiebung der an der letzten durchlaufenen Teilung in unterschiedliche Richtungen autretenden Teil-Vernierstreifenmuster in Bruchteilen von $360°$; diese Phasenverschiebung entspricht der Phasenverschiebung der austretenden Beugungsordnungen zueinander an jedem Ort in der Ebene der letzten durchlaufenen Teilung. Im Fall des obigen Ausführungsbeispieles der Figur 4 liegt eine Phasenverschiebung von $180°$ vor, d. h. $\eta$ ergibt sich dann als $\eta = 0.5$; allgemein gilt $0 \leq \eta < 1$.

Für die Größe $d_{VT}$, d.h. den Vernier-Talbot-Abstand gilt in diesem Beispiel $d_{VT} = (\Lambda_{Vernier} * TP_M)/\lambda$. Unmittelbar hinter der letzten durchlaufenen Teilung ist daher gemäß der Gleichung (4) keine oder lediglich eine geringe Modulation der Abtastsignale bzw. nur ein geringer Kontrast des Vernier-Streifenmusters zu erwarten. Die erste mögliche Detektorebene ergibt sich für $0 \leq \eta < 1$ mit $n = 0$ somit im Abstand $Z_0$.

Allgemein wird somit erfindungsgemäß bei abbildenden Systemen $\eta = 0$ und $n > 0$ gewählt, bei interferentiellen Systemen hingegen $\eta \neq 0$ und $n = 0, 1, 2, 3,....$

Wenn im Gegensatz zum dargestellten Ausführungsbeispiel die Abtastteilung 11.4a, 11.4b nicht auf der zur Lichtquelle orientierten Oberseite der Abtastplatte 11.3 angeordnet wird, sondern die Abtastteilung 11.4b auf der zur Meßteilung 12.2 orientierten Unterseite der Abtastplatte 11.3 angeordnet wird, so könnte durch eine geeignete Wahl der Dicke der Abtastplatte 11.3 die Detektoranordnung 11.5 unmittelbar auf der Oberseite der Abtastplatte 11.3 angebracht werden, was dann dem Fall $n = 0$ entsprechen würde. In einer derartigen Ausführungsform wäre dann auch die Kontaktierung der Detektoranordnung 11.5 über die Abtastplatte 11.3 möglich. Dies könnte dann z.B. in bekannter Chip-On-Glass-Technik und/oder in Flip-Chip-Technik erfolgen.

Die Signalperiode SP der detektierten Abtastsignale entspricht in diesem Ausführungsbeispiel im übrigen der halben Meßteilungsperiode $TP_M$, d.h. $SP = TP_M/2 = 4\mu m$

Nachfolgend sei eine abgewandelte Form des Ausführungsbeispieles der Figur 4 angegeben, d.h. das nunmehr vierte Ausführungsbeispiel der vorliegenden Erfindung, das wiederum als interferentielles System ausgebildet ist. Das Abtastgitter 11.4a, 11.4b ist erneut als Phasengitter ausgebildet und weist eine Teilungsperiode $TP_A = 8\mu m$, einen Phasenhub $\varphi = (2/3)\pi$ sowie ein Steg-Teilungsperioden-Verhältnis $\tau \approx 0.34$ auf. Die Meßteilung 12.2 besitzt eine Teilungsperiode $TP_M = 7.874\ \mu m \neq TP_A$, einen Phasenhub $\varphi = \pi$ und ein Steg-Teilungsperioden-Verhältnis $\tau = 0.5$. Die Vernier-Periode $\Lambda_{Vernier}$ ergibt sich aus Gl. (1) hierbei als $\Lambda_{Vernier} = 1/((2/TP_A) - (2/TP_M))$. Für die Größe $\eta$ gilt in diesem Fall $\eta = 1/3$. Für die nachfolgend noch zu erläuternde Größe ß gilt wiederum $\beta = 1$.

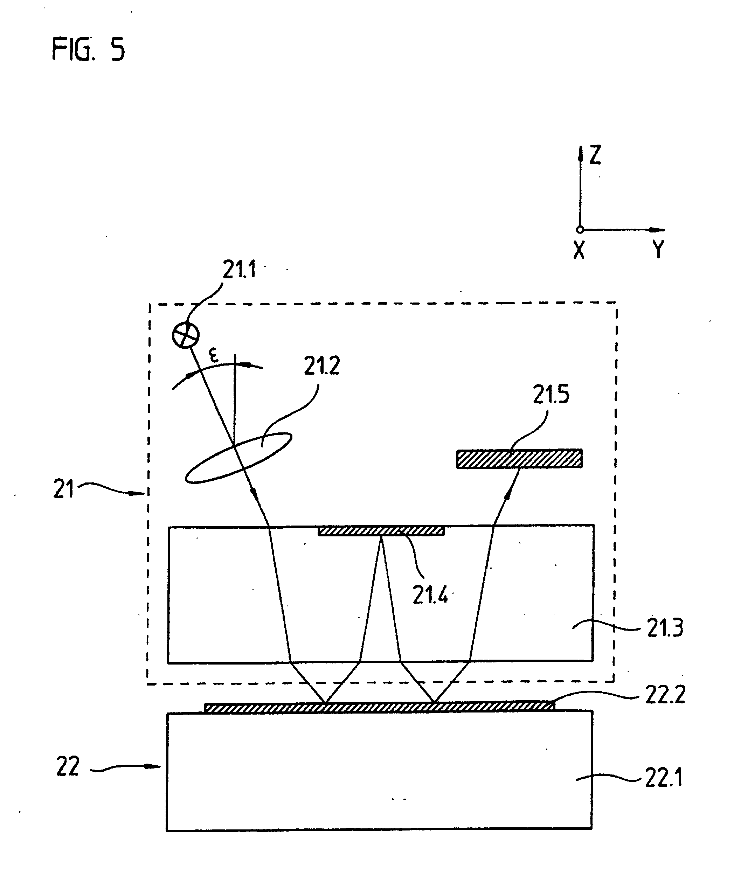

Eine weitere Ausführungsform einer interferentiellen, erfindungsgemäßen optischen Positionsmeßeinrichtung und damit das insgesamt fünfte Ausführungsbeispiel im Rahmen der vorliegenden Erfindung ist in Figur 5 dargestellt.

Die dargestellte Positionsmeßeinrichtung umfaßt wiederum eine Abtasteinheit 21, die in Meßrichtung x gegenüber einer Meßteilung 22.2 verschiebbar angeordnet ist, wobei die Meßrichtung x erneut senkrecht zur Zeichenebene orientiert ist. In einer besonders vorteilhaften Ausführungsform ist die Meßteilung 22.2 als flexibles Maßband ausgebildet. Auf Seiten der Abtasteinheit 21 ist eine Lichtquelle 21.1 vorgesehen, ausgebildet als LED oder als geeigneter Halbleiterlaser, deren optische Achse in Strichrichtung um einen Winkel $\varepsilon$ gegenüber der Oberseite der transparenten Abtastplatte 21.3 verkippt angeordnet ist. Der Lichtquelle 21.1 ist eine Kollimatoroptik 21.2 nachgeordnet, die die von der Lichtquelle 21.1 emittierten Strahlenbündel durchtreten, bevor diese die Abtastplatte 21.3 in einem transparenten, optisch nicht-wirksamen Bereich durchlaufen. Nach dem Durchtritt durch die Abtastplatte 21.3 gelangen die Strahlenbündel das erste Mal auf die als Reflexions-Phasengitter ausgebildete Meßteilung 22.2. Diese besitzt eine Meßteilungsperiode $TP_M = 16\mu m$, den Phasenhub $\varphi = \pi$ und das Steg-Teilungsperioden-Verhältnis $\tau = 0.5$. Von der Meßteilung 22.2 aus werden die Strahlenbündel in Richtung der Abtastplatte 21.3 auf eine dort angeordnete Abtastteilung 21.4 zurückreflektiert, welche innenliegend an der Oberseite der Abtastplatte 21.3 angeordnet ist. Die vorgesehene Abtastteilung 21.4 ist als reflektierendes Phasengitter mit der Abtast-Teilungsperiode $TP_A = 7.874\mu m \neq 0.5 * TP_M$, einem Phasenhub $\varphi = \pi$ sowie einem Steg-Teilungsperioden-Verhältnis $\tau = 0.5$ ausgebildet. In Bezug auf die Definition der verschiedenen Gitterparameter sei erneut auf die obigen Ausführungsbeispiele verwiesen. Von der Abtastteilung 21.4 erfolgt eine Rückreflexion der gebeugten Strahlenbündel in die Richtung der Meßteilung 22.2, von wo wiederum eine zweite Reflexion in Richtung der Abtastplatte 21.3 erfolgt. Die Abtastplatte 21.3 wird von den von der Meßteilung 22.2 kommenden Strahlenbündeln in einem transparenten Bereich durchlaufen, ehe das nach der letzten passierten Teilung 22.2 resultierende Vernier-Streifenmuster über eine Detektoranordnung 21.5 erfaßt wird. Diese ist wiederum erfindungsgemäß in einer geeigneten Detektorebene angeordnet. Das dabei erfaßte Vernier-Streifenmuster weist eine Vernier-Periode $\Lambda_{Vernier}$ auf, die sich gemäß Gl. (1) als $\Lambda_{Vernier} = 1/((4/TP_M) - (2/TP_A))$ aus der oben aufgeführten Gleichung (3) ergibt. Desweiteren gilt $\beta = 1$, $\eta = \frac{1}{2}$.

Für die Entfernungen $Z_n$ von der letzten Teilung, in denen es zur phasenrichtigen Überlagerung der verschiedenen Teil-Vernierstreifenmuster kommt, gilt auch in diesem Fall die obige Gleichung (4) mit $\eta = 1/2$. Entsprechend erfolgt auch in diesen Ebenen die Anordnung der Detektoranordnung 22.5 etc..

Wiederum ergibt sich, daß unmittelbar hinter der letzten durchlaufenen Teilung, was in diesem Fall die Meßteilung 22.2 ist, lediglich eine geringe Modulation der detektierten Abtastsignale zu erwarten ist. Die erste, grundsätzlich mögliche Abtastebene mit $n = 0$ erweist sich in dieser Konfiguration ebenfalls als nicht optimal, da diese bei den gegebenen Parametern zwischen der Meßteilung 22 und der Abtastplatte 21.3 liegen würde. Aus diesem Grund wird die Detektoranordnung 21.5 in der Detektorebene mit dem Abstand $Z_1$ ($n = 1$) von der letzten durchlaufenen Teilung aus plaziert, wo sich erfindungsgemäß ein Vernier-Streifenmuster mit hinreichendem Kontrast detektieren läßt.

Die Signalperiode SP der detektierten Abtastsignale ergibt sich in diesem Ausführungsbeispiel als $SP = TP_M/4$.

In einer weiteren Variante der Ausführungsform gemäß Figur 5, d.h. in einem sechsten Ausführungsbeispiel der vorliegenden Erfindung, werden die folgende Parameter gewählt. Für die als Phasengitter ausgebildete Meßteilung 22.2 gilt $TP_M \neq TP_A$; Phasenhub $\varphi = 2/3\,\pi$, Steg-Teilungsperiodenverhältnis $\tau \approx 0.34$. Für die ebenfalls als Phasengitter ausgebildete Abtastteilung 21.4 gilt $TP_A \neq TP_M$; Phasenhub $\varphi = \pi$, Steg-Teilungsperiodenverhältnis $\tau = 0.5$ und ferner $\beta = 1$, $\eta = 1/3$.

In Bezug auf die Anordnung der Abtastteilung 21.4 auf Seiten der Abtastplatte 21.3 gibt es wiederum verschiedene Möglichkeiten. So kann die Abtastteilung 21.4 direkt auf der Oberseite der Abtastplatte 21.3 angeordnet werden, was eine geringere Verschmutzungsempfindlichkeit zur Folge hat. Ebenso ist es jedoch möglich bei der Wahl der entsprechenden Dicke der Abtastplatte 21.3 die Abtastteilung 21.4 auf der zur Meßteilung zeigenden Seite der Abtastplatte 21.3 anzuordnen. Bei dieser Variante könnte die Detektoranordnung 21.5 unmittelbar auf der Oberseite der Abtastplatte 21.3 angeordnet werden.

Nachfolgend seien noch weitere Ausführungsvarianten der optischen Positionsmeßeinrichtung diskutiert, die ebenfalls auf den erfindungsgemäßen Überlegungen basieren.

So könnte beispielsweise die Meßteilung 22.2 im Ausführungsbeispiel der Figur 5 in gekrümmter Form auf der Innen- oder Außenseite eines rotierenden Zylinders angeordnet werden. Die Drehachse des Zylinders ist hierbei in y-Richtung orientiert. In einer derartigen Variante resultiert aufgrund der gekrümmten Anordnung der Meßteilung 22.2 eine Vergrößerung oder Verkleinerung des abzutastenden Vernier-Streifenmusters in der Detektorebene. Im Fall der Anordnung der Meßteilung auf der Zylinder-Außenseite ergibt sich eine Vergrößerung, im Fall der Anordnung auf der Zylinder-Innenseite eine entsprechende Verkleinerung. Dieser optische Effekt kann für den Fall einer gekrümmten Meßteilung in obiger Gl. (3) ebenso berücksichtigt werden, wie für alle weiteren Fälle mit nicht-kollimierten Strahlengängen, die z.B. durch beliebige fokussierende oder zerstreuende optische Elemente in den Strahlengängen verursacht werden. Hierzu wird ein Vergrößerungs- bzw. Korrekturfaktor $\beta$ eingeführt, der die Übertragung bzw. Vergrößerung der Teil-Vernierstreifen-Periode vom Ort der letzten durchlaufenen Teilung zur Detektorebene beschreibt. Es resultiert somit die allgemeine Gleichung (3'):

$$d_{VT} = (\beta * \Lambda_{Vernier} * TP_{eff})/\lambda \qquad\qquad (Gl.\ (3'))$$

bzw.

$$d_{VT} = \beta * d_{VT0},$$

mit

$$d_{VT0} = (\Lambda_{Vernier} * TP_{eff})/\lambda$$

und

$\Lambda_{Vernier}$:   Vernierperiode der Teil-Vernierstreifen am Ort der letzten durchlaufenen Teilung

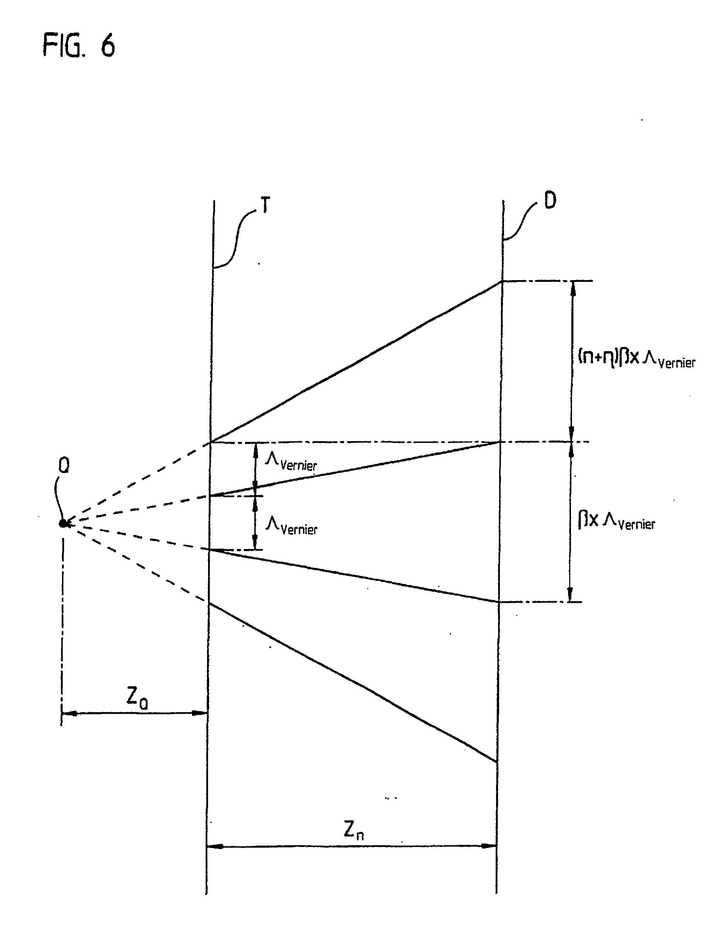

Der in die allgemeine Gleichung (3') eingehende Vergrößerungsfaktor $\beta$ hängt selbstverständlich von bestimmten geometrischen Größen innerhalb der erfindungsgemäßen Positionsmeßeinrichtung ab. In diesem Zusammenhang sei auf die Figur 6 verwiesen, die zur Erläuterung der relevanten Größen dient, durch die der Faktor $\beta$ bestimmt wird. In Figur 6 ist neben der letzten durchlaufenen Teilung T, in deren Ebene ein Teil-Vernierstreifenmuster mit der Vernierperiode $\Lambda_{Vernier}$ vorliegt, ferner die Detektorebene D im Abstand $Z_n$ von der Teilung T dargestellt, in der aufgrund des vorliegenden divergenten Strahlenganges ein um den Faktor $\beta$ vergrößertes Vernier-Streifenmuster vorliegt. Der ferner in Figur 6 angedeutete Punkt Q kann in diesem Fall als virtueller bzw. realer Quellenpunkt der Strahlenbündel bzw. des Vernierstreifenmusters betrachtet werden. Der Abstand $Z_Q$ gibt somit die Entfernung des realen oder virtuellen Quellenpunktes von der letzten durchlaufenen Teilung T an. Im Fall $\beta > 1$, d.h. im Fall der Vergrößerung des Vernier-Streifenmusters gilt für den Abstand $Z_Q$: $Z_Q > 0$; im Fall $\beta < 1$, d.h. im Fall einer theoretischen Verkleinerung des Streifenmusters gilt hingegen: $Z_Q < 0$.
Nach den Gesetzen der zentrischen Streckung gilt bei einer derartigen Geometrie für den Vergrößerungs- bzw. Korrekturfaktor $\beta$ demzufolge:

$$\beta = (Z_n + Z_Q)/Z_Q$$

Für den oben erwähnten Fall der Anordnung der Meßteilung auf der Zylinderaußenseite ist der Faktor $\beta > 1$ zu wählen; im Fall der Anordnung der Meßteilung auf der Zylinder-Innenseite wäre hingegen $\beta < 1$ zu wählen.
Aus der Gleichung (4) sowie der oben erläuterten Gleichung (3') folgt somit die für alle erfindungsgemäßen Systeme gültige Gleichung (5), aus der sich die Lage der Detektorebenen bzw. deren Abstände $Z_n$ von der letzten durchlaufenen Teilung ermitteln lassen:

$$1/Z_n + 1/Z_Q = 1/((n + \eta) * d_{VT0}) \qquad\qquad (Gl.\ 5)$$

Die Bedeutung der in Gl. (5) vorkommenden Größen $Z_Q$, n und $\eta$ wurde bereits oben erläutert. Ebenso wurde die Definition für die Größe $d_{VT0}$ bereits erwähnt, wobei in deren Definition die Vernierperiode $\Lambda_{Vernier}$ eingeht.
Während bei den diskutierten abbildenden Systemen sich die Vernierperiode $\Lambda_{Vernier}$ gemäß Gl. (1) analytisch bestimmen läßt, ist im Fall einer nicht-kollimierten Beleuchtung bzw. beim Einsatz von optischen Elementen im Strahlengang, die die Divergenz der Strahlenbündel beeinflußen, die Angabe eines eindeutigen, analytischen Ausdruckes für die Vernier-Periode $\Lambda_{Vernier}$ analog zu Gl. (1) nicht möglich. Die Vernier-Periode $\Lambda_{Vernier}$ läßt sich bei diesen optischen Verhältnissen nur durch Beziehungen angeben, die speziell an die optischen Gegebenheiten angepaßt sind; alternativ ist die Bestimmung der Vernier-Periode $\Lambda_{Vernier}$ bei derartigen Systemen auch durch numerische Methoden möglich, wie etwa dem sog. "Ray-Tracing".
Grundsätzlich sei deshalb unter der Vernier-Periode $\Lambda_{Vernier}$ in der allgemeingültigen Gleichung (5) die Periode der Teil-Vernierstreifen am Ort der letzten durchlaufenen Teilung verstanden.
Die Gleichung (5) ist wie bereits angedeutet sowohl für den Fall einer nicht-kollimierten Beleuchtung als auch für den Fall einer kollimierten Beleuchtung gültig. Im letztgenannten Fall wäre die Größe $Z_Q$ als $Z_Q = \infty$, d.h. $\beta = 1$ zu wählen, womit Gleichung (5) wiederum identisch mit der oben diskutierten Gleichung (4) ist. Umgekehrt ist im Fall der nicht-kollimierten Beleuchtung die Größe $Z_Q$ endlich, d.h. $Z_Q \neq \infty$, und somit $\beta \neq 1$.

Nachfolgend sei der Fall diskutiert, wenn die Größe $Z_Q$ in Gleichung (5) als $Z_Q = (n + \eta) * d_{VT0}$ gewählt wird, mit n =, 1, 2.... Es ergibt sich dann ein Vernier-Streifenmuster im Abstand $Z_n = \infty$ von der letzten durchlaufenen Teilung aus. In der Praxis muß dann die Detektoranordnung in der Brennebene einer der letzten Teilung nachgeordneten fokussierenden Linse plaziert werden.

Grundsätzlich können selbstverständlich der letzten durchlaufenen Teilung auch sog. Relais-Optiken nachgeordnet werden, die ein Bild der Detektorebene, die sich gemäß Gl. (5) ergibt, in einer anderen Ebene erzeugen.

Abschließend sei ferner noch darauf hingewiesen, daß die oben für den Fall interferentieller Systeme eingeführte Gleichung (5) selbstverständlich bei entsprechender Wahl der Größe $\eta$ auch für abbildende Positionsmeßeinrichtungen gilt; in diesem Fall ist wie bereits diskutiert $\eta = 0$ zu wählen.

Dies bedeutet wiederum, daß die angegebenen Gleichungen (3') und (5) allgemeine Gültigkeit besitzen und durch die entsprechende Wahl der verschiedenen Parameter die diskutierten abbildenden und interferentiellen Varianten der erfindungsgemäßen optischen Positionsmeßeinrichtung korrekt beschrieben werden können. Hierbei beschreiben diese Gleichungen auch den bekannten Fall optischer Positionsmeßeinrichtungen, wie etwa abbildende Systeme gemäß der eingangs erwähnten DE 195 27 287 A1. Dort ist nahezu unmittelbar hinter der letzten durchlaufenen Teilung die Detektorebene plaziert und das resultierende Vernier-Streifenmuster detektiert wird, d.h. die Parameter n und $\eta$ sind bei derartigen Positionsmeßeinrichtungen als $n \cong 0$ und $\eta = 0$ zu wählen. Für die erfindungsgemäßen optischen Positionsmeßeinrichtungen sind demzufolge die Parameter n und $\eta$ in den allgemeingültigen Gleichungen (3') und (5) als $n > 0$ oder $\eta \neq 0$ zu wählen.

Grundsätzlich ist desweiteren an dieser Stelle noch anzumerken, daß selbstverständlich eine gewisse Toleranz in Bezug auf die exakte Lage der jeweiligen Detektorebene existiert. So kann auch bei einer geringen Abweichung von der Ideallage, die sich gemäß den obigen Gleichungen ergibt, noch eine ggf. hinreichende Intensitätsmodulation erreicht werden.

Ferner sei erwähnt daß im Rahmen der vorliegenden Erfindung etwa auch die Detektion eines senkrecht zur Meßrichtung verlaufenden periodischen Streifenmusters in Form sog. Moiré-Streifen möglich ist, wenn beispielsweise eine der verwendeten Teilungen als zweidimensionale Teilung ausgebildet ist und damit transversale, in Richtung der Moiré-Streifen abgelenkte Beugungsordnungen austreten. Alternativ ist die Erzeugung derartiger Moiré-Streifen selbstverständlich in bekannter Art und Weise zu erreichen, indem die eingesetzten Teilungen zueinander um einen bestimmten Winkel verdreht angeordnet werden.

Es existieren demzufolge eine Reihe von Möglichkeiten, wie die vorliegende Erfindung in verschiedensten Ausführungsformen ausgebildet werden kann. Die obige Beschreibung von Ausführungsbeispielen ist deshalb selbstverständlich keineswegs abschließend zu verstehen.

**Patentansprüche**

1.  Optische Positionsmeßeinrichtung zur Bestimmung der Relativlage zweier in Meßrichtung zueinander beweglicher Objekte mit

    a) mindestens einer periodischen Meßteilung (2.2; 12.2; 22.2), die mit einem der beiden Objekte verbunden ist,
    b) einer Abtasteinheit (1; 11; 21), die mit dem anderen Objekt verbunden ist, mit

       b1) einer Lichtquelle (1.1; 11.1; 21.1),
       b2) mindestens einer Abtastteilung (1.4; 11.4a, 11.4b; 21.4) sowie
       b3) einer Detektoranordnung (1.5; 11.5; 21.5) in einer Detektorebene, bestehend aus mehreren strahlungsempfindlichen Detektorelementen (D1,..D20) zur Abtastung eines periodischen Streifenmusters, welches aus der Wechselwirkung der von der Lichtquelle (1.1; 11.1; 21.1) emittierten Strahlenbündel mit den verschiedenen Teilungen resultiert, wobei die Detektorebene im Abstand $Z_n$ von der letzten, vor der Detektoranordnung durchlaufenen Teilung entfernt angeordnet ist und sich der Abstand $Z_n$ aus folgender Beziehung ergibt

$$1/Z_n + 1/Z_Q = 1/((n + \eta) * d_{VT0}),$$

       mit:

$Z_Q$: Entfernung der letzten, vor der Detektoranordnung durchlaufenen Teilung von realem oder virtuellem Quellenpunkt des periodischen Streifenmusters,

n= 0, 1, 2, 3,....,

$\eta$: Phasenverschiebung der an der letzten, vor der Detektoranordnung durchlaufenen Teilung in unterschiedliche Richtungen austretenden periodischen Streifenmuster in Bruchteilen von 360°,

wobei zumindest entweder n > 0 oder $\eta \neq 0$ gewählt ist und $0 < \eta < 1$,

$n + \eta \neq 0$, $Z_Q \neq 0$ und

$d_{VT0} = (TP_{eff} * \Lambda_{Vernier})/\lambda$, mit

$TP_{eff}$: effektive Teilungsperiode der Abtastanordnung, die die Richtungen der an der letzten, vor der Detektoranordnung durchlaufenen Teilung austretenden 0. und +/-1. Beugungsordnungen richtig beschreibt,

$\lambda$: Wellenlänge der verwendeten Lichtquelle,

$\Lambda_{Vernier}$: Periode des periodischen Streifenmusters am Ort der letzten, vor der Detektoranordnung durchlaufenen Teilung.

2. Optische Positionsmeßeinrichtung nach Anspruch 1, wobei die Detektorelemente (D1,..D20) in Meßrichtung (x) blockweise benachbart zueinander angeordnet sind, wobei mindestens zwei Blöcke (B1,..B5) vorgesehen sind und pro Block (B1,..B5) jeweils k einzelne Detektorelemente (D1,..D20) innerhalb des Abstandes $\beta * \Lambda_{Vernier}$ angeordnet sind mit $\beta = (Z_Q + Z_n)/Z_Q$ und wobei die Anordnung der Detektorelemente (D1,....D20) ferner dergestalt erfolgt, daß aus benachbarten Detektorelementen (D1,..D20) jedes Blockes (B1,..B5) bei der Abtastung um 360°/ k phasenversetzte Abtastsignale ($A_0$, $A_{90}$, $A_{180}$, $A_{270}$) resultieren.

3. Optische Positionsmeßeinrichtung nach Anspruch 2, wobei jeweils diejenigen Detektorelemente (D1,...D20) der verschiedenen Blöcke (B1,...B5) miteinander verschaltet sind, die phasengleiche Ausgangssignale liefern.

4. Optische Positionsmeßeinrichtung nach Anspruch 1, wobei für den Abstand $d_{VT}$ zwischen benachbarten Detektorebenen gilt

$$d_{VT} = \beta * d_{VT0},$$

mit

$$\beta = (Z_Q + Z_n)/Z_Q.$$

5. Optische Positionsmeßeinrichtung nach Anspruch 4, wobei eine kollimierte Beleuchtung mit $Z_Q = \infty$ und $\beta = 1$ vorgesehen ist.

6. Optische Positionsmeßeinrichtung nach Anspruch 4, wobei eine nicht-kollimierte Beleuchtung mit $Z_Q \neq \infty$ und $\beta \neq$ 1 vorgesehen ist.

7. Optische Positionsmeßeinrichtung nach Anspruch 1, wobei $\eta = 0$ und n > 0 gewählt ist.

8. Optische Positionsmeßeinrichtung nach Anspruch 1, wobei $\eta \neq 0$ und n = 0, 1, 2, 3,.... gewählt ist.

9. Optische Positionsmeßeinrichtung nach Anspruch 1, wobei die Abtasteinheit (1) eine transparente Abtastplatte (1.3) mit einer Abtastteilung (1.4) mit der Abtastteilungsperiode $TP_A$ umfaßt, so daß die von der Lichtquelle (1.1) emittierten Strahlenbündel zunächst die Abtastteilung (1.4) durchlaufen, dann auf eine reflektierende Meßteilung (2.2) mit der Meßteilungsperiode $TP_M$ auftreffen, wo eine Rückreflexion in Richtung der Abtastplatte (1.3) erfolgt, die rückreflektierten Strahlenbündel die Abtastplatte (1.3) benachbart zur Abtastteilung (1.4) durchlaufen und auf die Detektoranordnung (1.5) in der Detektorebene gelangen.

10. Optische Positionsmeßeinrichtung nach Anspruch 9 mit folgenden Parametern:

a) für die als Amplitudengitter ausgebildete Meßteilung (2.2):
$TP_M \neq TP_A$; Steg-Teilungsperiodenverhältnis $\tau = 0.5$
b) für die als Phasengitter ausgebildete Abtastteilung (1.4):
$TP_A \neq TP_M$; Phasenhub $\varphi = n/2$; Steg-Teilungsperioden-Verhältnis $\tau = 0.5$

c) und ferner:
$\eta = 0$, $\beta = 1$.

**11.** Optische Positionsmeßeinrichtung nach Anspruch 9 mit folgenden Parametern:

a) für die als Amplitudengitter ausgebildete Meßteilung (2.2):
$TP_M \neq 0.5 * TP_A$; Steg-Teilungsperiodenverhältnis $\tau = 0.5$
b) für die als Phasengitter ausgebildete Abtastteilung (1.4):
$TP_A \neq 2 * TP_M$; Phasenhub $\varphi = \pi$; Steg-Teilungsperioden-Verhältnis $\tau = 0.5$
c) und ferner:
$\eta = 0$, $\beta = 1$.

**12.** Optische Positionsmeßeinrichtung nach Anspruch 1, wobei die Abtasteinheit (11) eine transparente Abtastplatte (11.3) umfaßt, die eine transmittierende Abtastteilung (11.4a, 11.4b) mit der Abtastteilungsperiode $TP_A$ umfaßt, so daß die von der Lichtquelle (11.1) emittierten Strahlenbündel zunächst auf einen ersten Teilbereich der Abtastteilung (11.4a) gelangen, dann auf eine reflektierende Meßteilung (12.2) mit der Meßteilungsperiode $TP_M$ auftreffen und nach der Rückreflexion auf einen zweiten Teilbereich der Abtastteilung (11.4b) auftreffen und diesen durchlaufen, bevor sie auf die Detektoranordnung (11.5) in der Detektorebene gelangen.

**13.** Optische Positionsmeßeinrichtung nach Anspruch 12 mit folgenden Parametern:

a) für die als Phasengitter ausgebildete Meßteilung (12.2):
$TP_M \neq 0.5 * TP_A$; Phasenhub $\varphi = \pi$; Steg-Teilungsperiodenverhältnis $\tau = 0.5$
b) für die als Phasengitter ausgebildete Abtastteilung (11.4a, 11.4b):
$TP_A = 2 * TP_M$; Phasenhub $\varphi = \pi$; Steg-Teilungsperiodenverhältnis $\tau = 0.5$
c) und ferner:
$\beta = 1$, $\eta = 0.5$.

**14.** Optische Positionsmeßeinrichtung nach Anspruch 12 mit folgenden Parametern:

a) für die als Phasengitter ausgebildete Meßteilung (12.2):
$TP_M \neq TP_A$; Phasenhub $\varphi = \pi$; Steg-Teilungsperiodenverhältnis $\tau = 0.5$,
b) für die als Phasengitter ausgebildete Abtastteilung (11.4a, 11.4b):
$TP_M \neq TP_A$; Phasenhub $\varphi = (2/3)\pi$; Steg-Teilungsperiodenverhältnis $\tau \approx 0.34$
c) und ferner:
$\beta = 1$, $\eta = 1/3$.

**15.** Optische Positionsmeßeinrichtung nach Anspruch 1, wobei die Abtasteinheit (21) eine transparente Abtastplatte (21.3) umfaßt, die eine reflektierende Abtastteilung (21.4) mit der Abtastteilungsperiode $TP_A$ umfaßt, die der reflektierend ausgebildeten Meßteilung (22.2) mit der Meßteilungsperiode $TP_M$ zugewandt ist, so daß die von der Lichtquelle (21.1) emittierten Strahlenbündel zunächst die Abtastplatte (21.3) benachbart zur Abtastteilung (21.4) durchtreten, dann auf die reflektierende Meßteilung (22.2) auftreffen, wo eine Rückreflexion in Richtung der Abtastteilung (21.4) erfolgt, von wo eine erneute Rückreflexion auf die Meßteilung (22.2) erfolgt, ehe von dort erneut eine Reflexion in Richtung der Abtastplatte (21.3) erfolgt und die rückreflektierten Strahlenbündel die Abtastplatte (21.3) benachbart Abtastteilung (21.4) durchlaufen und auf die Detektoranordnung (21.5) in der Detektorebene gelangen.

**16.** Optische Positionsmeßeinrichtung nach Anspruch 15, wobei die Meßteilung (22.2) auf der Außen- oder Innenseite eines Zylinders angeordnet ist.

**17.** Optische Positionsmeßeinrichtung nach Anspruch 15, wobei die Meßteilung (22.2) als flexibles Maßband ausgebildet ist.

**18.** Optische Positionsmeßeinrichtung nach Anspruch 15 mit folgenden Parametern:

a) für die als Phasengitter ausgebildete Meßteilung (22.2):
$TP_M \neq 2 * TP_A$; Phasenhub $\varphi = \pi$, Steg-Teilungsperiodenverhältnis $\tau = 0.5$
b) für die als Phasengitter ausgebildete Abtastteilung (21.4):

$TP_A \neq 0.5 * TP_M$; Phasenhub $\varphi = \pi$, Steg-Teilungsperiodenverhältnis $\tau = 0.5$.
c) und ferner:
$\beta=1$, $\eta = 1/2$.

**19.** Optische Positionsmeßeinrichtung nach Anspruch 15 mit folgenden Parametern:

a) für die als Phasengitter ausgebildete Meßteilung:
$TP_M \neq TP_A$; Phasenhub $\varphi = 2/3\,\pi$, Steg-Teilungsperiodenverhältnis $\tau \approx 0.34$
b) für die als Phasengitter ausgebildete Abtastteilung:
$TP_A \neq TP_M$; Phasenhub $\varphi = \pi$, Steg-Teilungsperiodenverhältnis $\tau = 0.5$
c) und ferner:
$\beta = 1$, $\eta = 1/3$.

**Claims**

**1.** Optical position measuring system for determining the relative position of two objects which can be moved relative to each other in the measuring direction, having

a) at least one periodic measuring graduation (2.2; 12.2; 22.2), which is connected to one of the two objects,

b) a scanning unit (1; 11; 21), which is connected to the other object, having

b1) a light source (1.1; 11.1; 21.1),

b2) at least one scanning graduation (1.4; 11.4a, 11.4b; 21.4), as well as

b3) a detector arrangement (1.5; 11.5; 21.5) in a detector plane comprising a plurality of radiation sensitive detector elements (D1,...D20) for scanning a periodic strip pattern resulting from. the reciprocal action of the beams emitted by the light source (1.1; 11.1;21.1) with the various graduations, the detector plane being disposed spaced at the distance $Z_n$ from the last graduation passed before the detector arrangement and the distance $Z_n$ being produced from the following equation:

$$1/Z_n + 1/Z_Q = 1/((n + \eta) * d_{VTO}),$$

wherein:

$Z_Q$: is the distance of the last graduation passed before the detector arrangement from the real or virtual source point of the periodic strip pattern,
n = 0, 1, 2, 3,...,

$\eta$: is the phase shift in fractions of 360° of the periodic strip patterns exiting at the last graduation passed before the detector arrangement in different directions,
at least either n > 0 or $\eta \neq 0$ being selected and $0 < \eta < 1$,
$n + \eta \neq 0$, $Z_Q \neq 0$ and

$$d_{VTO} = (TP_{eff} * \Lambda_{vernier})/\lambda,$$

wherein

$TP_{eff}$: is an effective graduation period of the scanning arrangement, which correctly describes the directions of the 0 and +/- 1st orders of diffraction exiting at the last graduation passed before the detector arrangement,

$\lambda$: wave length of the light source used,

$\Lambda_{vernier}$:    period of the periodic vernier strip at the location of the last graduation passed before the detector arrangement.

2.  Optical position measuring system according to claim 1, the detector elements (D1,...D20) being disposed in the measuring direction (x) in blocks adjacent to each other, at least two blocks (B1,...B5) being provided, and respectively k individual detector elements (D1,...D20) per block (B1,...B5) being disposed within the distance $\beta * \Lambda_{vernier}$, with $\beta = (Z_Q + Z_n)/Z_Q$, and the arrangement of the detector elements (D1,...D20) furthermore being effected in such a way that scanning signals ($A_0$, $A_{90}$, $A_{180}$, $A_{270}$), which are phase-shifted by 360°/k, result from the adjoining detector elements (D1,...D20) of each block (B1,...B5) in the course of scanning.

3.  Optical position measuring system according to claim 2, the respective detector elements (D1,...D2) of the different blocks (B1,...B5), which provide equal-phased output signals, being connected to each other.

4.  Optical position measuring system according to claim 1, the following applying for the distance $d_{VT}$ between adjoining detector planes:

$$d_{VT} = \beta * d_{VTO},$$

wherein

$$\beta = (Z_Q + Z_n)/Z_Q.$$

5.  Optical position measuring system according to claim 4, a collimated illumination with $Z_Q = \infty$ and $\beta = 1$ being provided.

6.  Optical position measuring system according to claim 4, a non-collimated illumination with $Z_Q \neq \infty$ and $\beta \neq 1$ being provided.

7.  Optical position measuring system according to claim 1, $\eta$ being selected to equal 0 and n > 0.

8.  Optical position measuring system according to claim 1, $\eta$ being selected $\eta \neq 0$ and n = 0, 1, 2, 3, ...

9.  Optical position measuring system according to claim 1, the scanning unit (1) comprising a transparent scanning plate (1.3) with a scanning graduation (1.4) with the scanning graduation period $TP_A$, so that the beams emitted by the light source (1.1) first pass through the scanning graduation (1.4), then impinge on a reflecting measuring graduation (2.2) with the measuring graduation period $TP_M$, where a back reflection in the direction of the scanning plate (1.3) takes place, the back reflected beams pass through the scanning plate (1.3) adjacent to the scanning graduation (1.4) and reach the detector arrangement (1.5) in the detector plane.

10. Optical position measuring system according to claim 9, having the following parameters:

a) for the measuring graduation (2.2) configured as an amplitude grating:
$TP_M \neq TP_A$; ratio of bars to graduation periods E = 0.5,
b) for the scanning graduation (1.4) configured as a phase grating:
$TP_A \neq TP_M$; phase deviation 'H = /2; ratio of bars to graduation periods 'E = 0.5,
c) and furthermore:
$\eta = 0$, $\beta = 1$.

11. Optical position measuring system according to claim 9, having the following parameters:

a) for the measuring graduation (2.2) configured as an amplitude grating:
$TP_M \neq 0.5 * TP_A$; ratio of bars to graduation periods E = 0.5,
b) for the scanning graduation (1.4) configured as a phase grating:
$TP_A \neq 2 * TP_M$; phase deviation 'H = ; ratio of bars to graduation periods 'E = 0.5,
c) and furthermore:
$\eta = 0$, $\beta = 1$.

**12.** Optical position measuring system according to claim 1, the scanning unit (11) comprising a transparent scanning plate (11.3) which comprises a transmitting scanning graduation (11.4a, 11.4b) with the scanning graduation period $TP_A$, so that the beams emitted by the light source (11.1) initially reach a first partial region of the scanning graduation (11.4a), then impinge on a reflecting measuring graduation (12.2) with the scanning graduation period $TP_M$ and, following back reflection, impinge on a second partial region of the scanning graduation (11.4b) and pass through the latter before reaching the detector arrangement (11.5) in the detector plane.

**13.** Optical position measuring system according to claim 12, having the following parameters:

a) for the measuring graduation (12.2) configured as a phase grating:
$TP_M \neq 0.5 * TP_A$; phase deviation 'H = ; ratio of bars to graduation periods 'E = 0.5,
b) for the scanning graduation (11.4a, 11.4b) configured as a phase grating:
TPM = 2 * TPA; phase deviation 'H = ; ratio of bars to graduation periods 'E = 0.5,
c) and furthermore:
$\beta = 1$, $\eta = 0.5$.

**14.** Optical position measuring system according to claim 12, having the following parameters:

a) for the measuring graduation (12.2) configured as a phase grating:
$TP_M \neq TPA$; phase deviation 'H = ; ratio of bars to graduation periods 'E = 0.5,
b) for the scanning graduation (11.4a, 11.4b) configured as a phase grating:
$TP_M \neq TP_A$; phase deviation 'H = (2/3) ; ratio of bars to graduation periods $\tau \approx 0.34$,
c) and furthermore:
$\beta = 1$, $\eta = 1/3$.

**15.** Optical position measuring system according to claim 1, the scanning unit (21) comprising a transparent scanning plate (21.3) which comprises a reflecting scanning graduation (21.4) with the scanning graduation period $TP_A$ and facing the reflectingly configured measuring graduation (22.2) with the measuring graduation period $TP_M$, so that the beams emitted by the light source (21.1) first pass through the scanning plate (21.3) adjacent to the scanning graduation (21.4), then impinge on the reflecting measuring graduation (22.2), where a back reflection in the direction of the scanning graduation (21.4) takes place, from where another back reflection to the measuring graduation (22.2) takes place before, from there, another reflection in the direction of the scanning plate (21.3) takes place, and the back-reflected beams pass through the scanning plate (21.3) adjoining the scanning graduation (21.4) and reach the detector arrangement (21.5) in the detector plane.

**16.** Optical position measuring system according to claim 15, the measuring graduation (22.2) being disposed on the outside or inside of a cylinder.

**17.** Optical position measuring system according to claim 15, the measuring graduation (22.2) being configured as a flexible measuring tape.

**18.** Optical position measuring system according to claim 15, having the following parameters:

a) for the measuring graduation (22.2) configured as a phase grating:
$TP_M \neq 2 * TP_A$; phase deviation 'H = ; ratio of bars to graduation periods 'E = 0.5,
b) for the scanning graduation (21.4) configured as a phase grating:
$TP_A \neq 0.5 * TP_M$; phase deviation 'H = ; ratio of bars to graduation periods 'E = 0.5,
c) and furthermore:
$\beta = 1$, $\eta = 1/2$.

**19.** Optical position measuring system according to claim 15, having the following parameters:

a) for the measuring graduation configured as a phase grating:
$TP_M \neq TP_A$; phase deviation 'H = 2/3 ; ratio of bars to graduation periods 'E $\approx$ 0.34,
b) for the scanning graduation configured as a phase grating:
$TP_A \neq TP_M$; phase deviation 'H = , ratio of bars to graduation periods 'E = 0.5,
c) and furthermore:
$\beta = 1$, $\eta = 1/3$.

**Revendications**

1. Dispositif optique de mesure de position pour déterminer la position relative de deux objets mobiles l'un par rapport à l'autre dans la direction de mesure, comprenant

   a) au moins une division de mesure (2.2; 12.2; 22.2) périodique, qui est liée à l'un des objets,
   b) une unité de palpage (1; 11; 21) qui est liée à l'autre objet,

   b1) une source de lumière (1.1; 11.1, 21.1),
   b2) au moins une division de mesure (1.4; 11.4a, 11.4b; 21.4) ainsi
   b3) qu'un agencement de détecteurs (1.5; 11.5; 21.5) dans un plan de détecteurs comprenant plusieurs détecteurs élémentaires (D1...D20) sensibles au rayonnement, pour palper un modèle de bandes périodique, qui résulte de l'interaction du faisceau émis par la source de lumière (1.1; 11.1, 21.1) avec différentes divisions, le plan de détecteurs étant disposé à une distance $Z_n$ de la dernière division palpée par l'agencement de détecteurs, et la distance $Z_n$ étant donnée par la relation suivante

   $$1/Z_n + 1/Z_Q = 1/((n + \eta) * d_{VT0})$$

   avec

   $Z_Q$     distance de la dernière division balayée par l'agencement de détecteurs par rapport au point d'origine réel ou virtuel du modèle de bandes périodique,
          N= 0, 1, 2, 3...
   $\eta$      déphasage des modèles de bandes périodiques obtenus dans différentes directions au niveau de la dernière division balayée par l'agencement de détecteurs, en fractions de 360°,
          au moins soit n>0 ou $\eta \neq 0$ et $0 < \eta < 1$
          $v + \eta \neq 0$, $Z_0 \neq 0$ et
          $d_{VT0} = (TP_{eff} * \Lambda_{Vernier})/l$, avec
          $TP_{eff}$ période de division effective du dispositif de palpage qui décrit les directions des ordres de diffraction 0 et +/-1 apparaissant au niveau
          de la dernière division balayée par l'agencement de détecteurs,

   $\lambda$       longueur d'onde de la source de lumière utilisée
   $\Lambda_{Vernier}$   période du modèle de bandes périodique à l'emplacement de la dernière division balayée par l'agencement de détecteurs.

2. Dispositif optique de mesure de position selon la revendication 1, dans lequel les détecteurs élémentaires (D1... D20) sont disposés par blocs dans le voisinage les uns des autres dans la direction de mesure (x), dans lequel au moins deux blocs (B1, B5) sont prévus, avec par blocs (B1, B5), k détecteurs élémentaires (D1...D20) qui sont disposés sur la distance $\beta * \Lambda_{vernier}$, avec $\beta = (Z_Q + Z_n)/Z_Q$, et dans lequel l'agencement des détecteurs élémentaires (D1...D20) est tel qu'il résulte de détecteurs élémentaires voisins (D1...D20) de chaque bloc (B1, B5), lors du palpage, des signaux de palpage ($A_0$, $A_{90}$, $A_{180}$, $A_{270}$) déphasés de 360°/k.

3. Dispositif optique de mesure de position selon la revendication 2, dans lequel les détecteurs élémentaires (D1... D20) des différents blocs (B1, B5), qui délivrent des signaux de sortie en phase, sont connectés entre eux.

4. Dispositif optique de mesure de position selon la revendication 1, dans lequel la distance $d_{VT}$ entre des plans de détecteurs voisins est

   $$d_{VT} = \beta * d_{VT0}$$

   avec

   $$\beta = (Z_Q + Z_N)/Z_Q.$$

**5.** Dispositif optique de mesure de position selon la revendication 4, dans lequel un éclairage non collimaté avec $Z_Q$=oo et $\beta\neq1$ est prévu.

**6.** Dispositif optique de mesure de position selon la revendication 1, dans lequel $\eta$=0 et $\eta$>0.

**7.** Dispositif optique de mesure de position selon la revendication 1, dans lequel $\eta\neq0$ et $\eta$>0.

**8.** Dispositif optique de mesure de position selon la revendication 1, dans lequel $\eta\neq0$ et $\eta$=0, 1, 2, 3..

**9.** Dispositif optique de mesure de position selon la revendication 1, dans lequel l'unité de palpage (1) comprend une plaque de palpage (1.3) transparente avec une division de palpage (1.4) de période de palpage $TP_A$, de sorte que les faisceaux émis par la source de lumière (1.1), tout d'abord parcourent la division de palpage (1.4), puis frappent une division de mesure (2.2) réfléchissante avec la période de mesure $TP_M$ sur laquelle une rétroréflexion a lieu en direction de la plaque de palpage (1.3), les faisceaux rétroréfléchis traversent la division de mesure (1.4) dans le voisinage de la plaque de palpage (1.3) et arrivent sur l'agencement de détecteurs (1.5) dans le plan de détecteurs.

**10.** Dispositif optique de mesure de position selon la revendication 9, avec les paramètres suivants:

    a) pour la division de mesure (2.2) conformée en réseau d'amplitude:
$TP_M\neq TP_A$; rapport barrette-période de division t=0.5
b) pour la division de palpage (2.2) conformée en réseau de phase:
$TP_A\neq TP_M$; amplitude de déphasage $\varphi=\pi/2$; rapport barrette-période de division t=0.5
c) et en outre
$\eta$=0, $\beta$=1.

**11.** Dispositif optique de mesure de position selon la revendication 9, avec les paramètres suivants:

    a) pour la division de mesure (2.2) conformée en réseau d'amplitude:
$TP_M\neq0,5*TP_A$; rapport barrette-période de division t=0.5
b) pour la division de palpage (2.2) conformée en réseau de phase:
$TP_A\neq2*TP_M$; amplitude de déphasage $\varphi=\pi$; rapport barrette-période de division t=0.5
c) et en outre
$\eta$=0, $\beta$=1.

**12.** Dispositif optique de mesure de position selon la revendication 1, dans lequel l'unité de palpage (1) comprend une plaque de palpage (11.3) transparente avec une division de palpage (11.4a, 11.4b) translucide de période de palpage $TP_A$, de sorte que les faisceaux émis par la source de lumière (11.1), tout d'abord arrivent sur une première zone partielle de la division de palpage (11.4a), puis frappent une division de mesure (12.2) réfléchissante avec la période de mesure $TP_M$ et après rétroréflexion arrivent sur une seconde zone partielle de la division de palpage (11,4b), et la traversent avant de parvenir sur l'agencement de détecteurs (11.5) dans le plan de détecteurs.

**13.** Dispositif optique de mesure de position selon la revendication 12, avec les paramètres suivants:

    a) pour la division de mesure (12.2) conformée en réseau de phase:
$TP_M\neq0,5*TP_A$; amplitude de déphasage $\varphi=\pi$; rapport barrette-période de division t=0.5
b) pour la division de palpage (11.4a, 11.4b) conformée en réseau de phase:
$TP_A=2*TP_M$; amplitude de déphasage $\varphi=\pi$; rapport barrette-période de division t=0.5
c) et en outre
$\eta$=0,5, $\beta$=1.

**14.** Dispositif optique de mesure de position selon la revendication 12, avec les paramètres suivants:

    a) pour la division de mesure (12.2) conformée en réseau d'amplitude:
$TP_M\neq TP_A$; amplitude de déphasage $\varphi=\pi$; rapport barrette-période de division t=0.5
b) pour la division de palpage (11.4a, 11.4b) conformée en réseau de phase:
$TP_M\neq TP_A$; amplitude de déphasage $\varphi=2/3\pi$; rapport barrette-période de division t=0.34
c) et en outre

$\eta=1/3$, $\beta=1$.

**15.** Dispositif optique de mesure de position selon la revendication 1, dans lequel l'unité de palpage (21) comprend une plaque de palpage (21.3) transparente avec une division de palpage (21.4) réfléchissante, de période de palpage $TP_A$, qui est tournée vers la division de mesure (22,2) réfléchissante, de sorte que les faisceaux émis par la source de lumière (21.1), tout d'abord traversent la plaque de palpage (21.3) dans le voisinage de la division de palpage (21.4), là une nouvelle réflexion a lieu en direction de la plaque de palpage (21.4), où se produisent une nouvelle retroréflexion sur la division de mesure (22.2), puis une nouvelle réflexion en direction de la plaque de palpage (21.3), puis les faisceaux rétroréfléchis parcourent la plaque de palpage (21.3) dans le voisinage de la division de palpage (21.4) avant de parvenir sur l'agencement de détecteurs (21.5) dans le plan de détecteurs.

**16.** Dispositif optique de mesure de position selon la revendication 15, dans lequel la division de mesure (22.2) est disposée sur la face extérieure ou la face intérieure d'un cylindre.

**17.** Dispositif optique de mesure de position selon la revendication 15, dans lequel la division de mesure (22.2) est conformée en ruban flexible.

**18.** Dispositif optique de mesure de position selon la revendication 15, avec les paramètres suivants:

      a) pour la division de mesure (22.2) conformée en réseau de phase:
      $TP_M \neq 2*TP_A$; amplitude de déphasage $\varphi=\pi$; rapport barrette-période de division t=0.5
      b) pour la division de palpage (21.4) conformée en réseau de phase:
      $TP_A \neq 0,5*TP_M$; amplitude de déphasage $\varphi=\pi$; rapport barrette-période de division t=0.5
      c) et en outre
      $\eta=1/2$, $\beta=1$.

**19.** Dispositif optique de mesure de position selon la revendication 15, avec les paramètres suivants:

      a) pour la division de mesure (12.2) conformée en réseau d'amplitude:
      $TP_M \neq TP_A$; amplitude de déphasage $\varphi=2/3\pi$; rapport barrette-période de division t=0.34
      b) pour la division de palpage conformée en réseau de phase:
      $TP_M \neq TP_A$; amplitude de déphasage $\varphi=\pi$; rapport barrette-période de division t=0.5
      c) et en outre
      20. $\eta=1/3$, $\beta=1$.

FIG. 1

FIG. 2

FIG. 3

$$\sin \alpha = \frac{\lambda}{TP_{eff}}$$

$$\Rightarrow TP_{eff} = \frac{\lambda}{\sin \alpha}$$

FIG. 4

FIG. 5

FIG. 6